# EUROPEAN PATENT APPLICATION

(11) **EP 4 439 289 A1**
(43) Date of publication of application: **02.10.2024**
(21) Application number: 23745825.2
(22) Date of filing: 05.01.2023
(51) Int. Cl.: G06F 9/451, G06F 3/0481

(54) **APPLICATION COMPONENT SHARING METHOD AND RELATED DEVICE**

(30) Priority: 28.01.2022 CN 202210103825; 31.03.2022 CN 202210337826
(71) Applicant: Huawei Technologies Co., Ltd., Shenzhen, Guangdong 518129 (CN)
(72) Inventor: GU, Bing, Shenzhen, Guangdong 518129 (CN); CHEN, Xiaoxiao, Shenzhen, Guangdong 518129 (CN); WANG, Zhiqiang, Shenzhen, Guangdong 518129 (CN); DING, Yaling, Shenzhen, Guangdong 518129 (CN); ZHOU, Songle, Shenzhen, Guangdong 518129 (CN)
(74) Representative: Goddar, Heinz J.
(86) International application number: PCT/CN2023/070633
(87) International publication number: WO 2023/142940

(57) **Abstract**

This application discloses an application widget sharing method and a related device. An electronic device (namely, a local device) may establish a trusted connection to one or more remote devices. Through the trusted connection, the electronic device may share, with the one or more remote devices, an application widget provided by the local device, so that a problem that the local device cannot share the application widget with the remote device can be resolved. A user can directly use the shared application widget on the remote device. This simplifies user operations and improves user experience.

## Description

This application claims priority to Chinese Patent Application No. 202210103825.0, filed with the China National Intellectual Property Administration on January 28, 2022 and entitled "CROSS-DEVICE WIDGET INTERACTION METHOD", and priority to Chinese Patent Application No. 202210337826.1, filed with the China National Intellectual Property Administration on March 31, 2022 and entitled "APPLICATION WIDGET SHARING METHOD AND RELATED DEVICE", which are incorporated herein by reference in their entireties.

### TECHNICAL FIELD

This application relates to the field of terminal technologies, and in particular, to an application widget sharing method and a related device.

### BACKGROUND

With popularization of intelligent electronic devices and development of internet technologies, electronic devices such as smartphones, notebook computers, and tablet computers have become indispensable products in people's daily life. To meet increasing use requirements of users, types and quantities of applications (Applications, APPs) installed on these electronic devices are increasing. Generally, entrances of these applications are displayed on a desktop of the electronic device in a form of a desktop icon. In addition to desktop icons, some current electronic device manufacturers further provide a desktop application widget function. These desktop application widgets not only can serve as entrances of applications, but also have characteristics such as clearer vision, freer layout, more flexible dimensions, richer content, and personalized customization compared with conventional applications. Application content can be presented in a lightweight, fast, and efficient manner, and a user can perform a shortcut operation to access a service in one step.

However, currently, an application scenario of the application widgets is limited, and user experience is poor.

### SUMMARY

Embodiments of this application provide an application widget sharing method and a related device. A local device may share an application widget with one or more remote devices. This simplifies user operations and improves user experience.

According to a first aspect, an embodiment of this application provides an application widget sharing method, applied to a first electronic device. The method includes: The first electronic device displays a first user interface, where the first user interface includes a first application widget; and the first electronic device detects an operation of sharing the first application widget by a user with a second electronic device, and the first electronic device sends first information to the second electronic device in response to the operation, where the first information is information about the first application widget, and the first information is used by the second electronic device to install and display the first application widget.

By implementing the method provided in the first aspect, one-tap sharing of an application widget from a local device (namely, the first electronic device) to a remote device (namely, the second electronic device) can be implemented, and the remote device can more conveniently install, run, and display an application widget shared by another electronic device, which is flexible and convenient. This simplifies user operations and improves user experience.

In a possible implementation, before that the first electronic device detects an operation of sharing the first application widget by a user with a second electronic device, the method further includes: The first electronic device detects an operation of sharing the first application widget by the user, and the first electronic device displays a first window in response to the operation, where the first window includes one or more identifier options, and the one or more identifier options include an identifier option of the second electronic device. That the first electronic device detects an operation of sharing the first application widget by a user with a second electronic device specifically includes: The first electronic device detects an operation of the user for the identifier option of the second electronic device.

In this way, when the user wants to share an application widget with another electronic device, the local device may display identifier options of one or more remote devices that establish connections to the local device, and the user selects a corresponding identifier option to share the application widget with the electronic device.

In a possible implementation, before that the first electronic device detects an operation of sharing the first application widget by a user with a second electronic device, the method further includes: The first electronic device detects a touch and hold operation of the user for the first application widget, and the first electronic device displays a second window, where the second window includes a first option, and the first option is used to share the first application widget. That the first electronic device detects an operation of sharing the first application widget by a user specifically includes: The first electronic device detects an operation of the user for the first option.

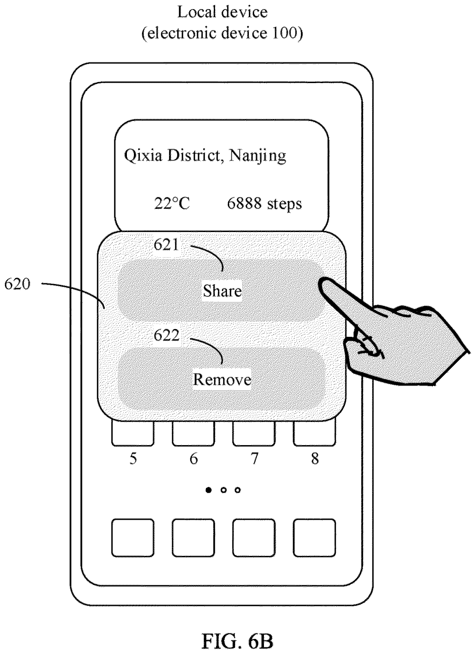

In this way, if the user wants to share the first application widget (for example, a local application widget of the local device) with another electronic device, the user may touch and hold the first application widget, and the local device may display the second window (for example, a window 620 shown in FIG. 6B). The window may display the first option (for example, an option 621 shown in FIG. 6B), and the user may tap the option to trigger sharing of the first application widget.

In a possible implementation, the first information includes an installation package of the first application widget.

In this way, when the user triggers sharing of the first application widget (for example, the local application widget of the local device) with an electronic device, the local device may send the installation package of the first application widget to the electronic device, so that the electronic device may install and display the first application widget based on the installation package.

In a possible implementation, because the installation package of the first application widget is an installation package that adapts to the local device, and is not necessarily an installation package that adapts to all devices, the one or more identifier options included in the first window may all be identifier options of other electronic devices that adapt to the installation package of the first application widget. In this way, the local device may display only the identifier option of the remote device on which the first application widget can be installed based on the installation package of the first application widget, to provide a sharing success rate.

In a possible implementation, because an application widget may be provided by an application, the first information may include an installation package (which may also be referred to as an application package) of the application that provides the first application widget, and the installation package may include an installation package (which may also be referred to as an application widget package) of the first application widget. In another possible implementation, the installation package of the first application widget may be separated from the installation package of the application. In this case, the first information may include only the installation package of the first application.

In this way, when the user triggers sharing of the first application widget with an electronic device, if the application package is not separated from the application widget package, the local device may send the application package to the electronic device, or if the application package is separated from the application widget package, the application widget does not depend on the application to run, but may run independently, so that the local device may send only the application widget package to the electronic device without sending the application package, which saves resources.

In a possible implementation, the first information further includes first data, the first data is data generated when the first electronic device runs the first application widget, the first data is used by the second electronic device to generate first content, and the first content is displayed on the first application widget.

In this way, after installing the first application widget, the remote device may display data generated when the local device runs the first application widget, and therefore, an effect of cross-device transfer can be achieved.

In a possible implementation, the first user interface is a desktop.

In this way, when the first user interface is the desktop, the local device may share a local application widget (for example, an application widget displayed on the desktop) with the remote device.

In a possible implementation, the first user interface is a user interface of an application market.

In this way, when the first user interface is the user interface of the application market, the local device may share, with the remote device, an application widget provided in the application market.

In a possible implementation, the first user interface is the user interface of the application market. Before that the first electronic device detects an operation of sharing the first application widget by a user with a second electronic device, the method further includes: The first electronic device detects an operation of the user for a sharing option, and the first electronic device displays a third window, where the third window includes a second option, and the second option is used to share the first application widget with one or more electronic devices. That the first electronic device detects an operation of sharing the first application widget by a user specifically includes: The first electronic device detects an operation of the user for the second option.

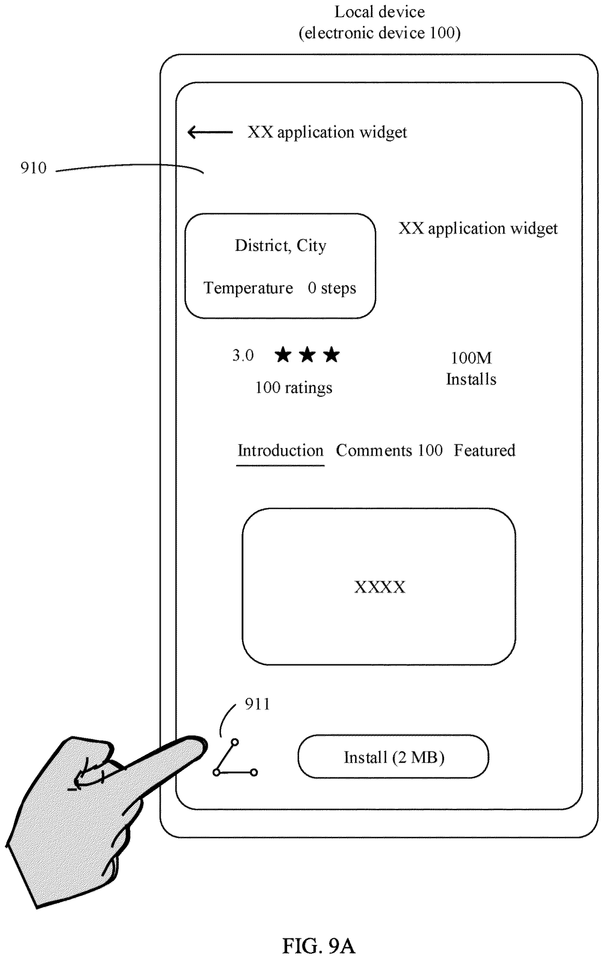

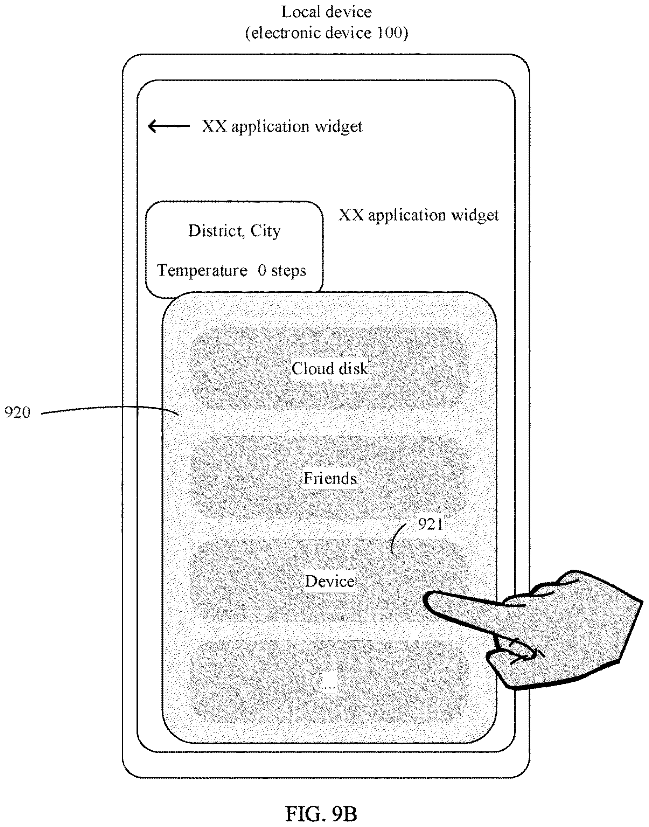

In this way, after the user taps the sharing option (for example, an option 911 shown in FIG. 9A), the local device may display the third window (for example, a window 920 shown in FIG. 9B). The window may display the second option (for example, an option 921 shown in FIG. 9B), and the user may tap the option to trigger sharing of the first application widget with another electronic device.

In a possible implementation, the first information includes a first download link and a widget identifier of the first application widget, and the first download link is a link for downloading installation packages of all released application widgets in the application market; or the first information includes a second download link, and the second download link is a link for downloading an installation package of the first application widget adapted to the second electronic device.

In this way, when the user triggers sharing of the first application widget (for example, an application widget provided in the application market) with an electronic device, the local device may send, to the remote device, the link for downloading the installation packages of all the released application widgets in the application market and the widget identifier of the first application widget, or the link for downloading the installation package of the first application widget adapted to the second electronic device, so that the remote device can automatically download the installation package of the first application widget from the application market. This implements application widget sharing simply and conveniently.

In a possible implementation, the first information includes a third download link, and the third download link is a download link formed by combining the first download link with the widget identifier of the first application widget.

In this way, the remote device may download, from the application market by using the third download link and a device type of the remote device, the installation package of the first application widget adapted to the remote device. This implements application widget sharing simply and conveniently.

In a possible implementation, before that the first electronic device detects an operation of sharing the first application widget by a user with a second electronic device, the method further includes: The first electronic device establishes a communication connection to the second electronic device, and determines that the second electronic device is a trusted device.

In this way, application widget sharing can be performed across devices only when the local device establishes a communication connection to the remote device and the remote device is a trusted device, which improves security.

According to a second aspect, an embodiment of this application provides an application widget sharing method, applied to a second electronic device. The method includes: The second electronic device receives first information sent by a first electronic device, where the first information is information about a first application widget; and the second electronic device automatically installs and displays the first application widget based on the first information.

By implementing the method provided in the second aspect, the second electronic device may install, run, and display an application widget shared by another electronic device, which is flexible and convenient. This simplifies user operations, and improves user experience.

In a possible implementation, that the second electronic device displays the first application widget specifically includes: The second electronic device displays the first application widget on a desktop.

In this way, the second electronic device may display, on the desktop, the application widget shared by the another electronic device, to help a user view the application widget.

In a possible implementation, the first information includes an installation package of the first application. That the second electronic device automatically installs and displays the first application widget based on the first information specifically includes: The second electronic device automatically installs and displays the first application widget based on the installation package of the first application widget.

In this way, the second electronic device may install and display the application widget based on an installation package of the application widget shared by the another electronic device, which is simple and convenient.

In a possible implementation, the first information further includes first data, the first data is data generated when the first electronic device runs the first application widget, and that the second electronic device automatically installs and displays the first application widget based on the first information specifically includes: The second electronic device automatically installs and displays the first application widget based on the installation package of the first application widget and the first data, where first content is displayed in the first application widget, and the first content is generated by the second electronic device based on the first data.

In this way, the second electronic device may install the application widget based on the installation package of the application widget shared by the another electronic device, and display, on the application widget, data generated when the application widget runs on the another electronic device, and therefore, an effect of cross-device transfer can be achieved.

In a possible implementation, before that the second electronic device automatically installs and displays the first application widget based on the first information, the method further includes: The second electronic device determines that the first electronic device meets a first condition, where the first condition includes: the first electronic device and the second electronic device log in to a same account.

In this way, only when the first electronic device and the second electronic device log in to a same account, the second electronic device automatically installs and displays the first application widget, which improves security.

In a possible implementation, the first condition further includes: the first electronic device and the second electronic device access a same local area network.

In this way, only when the first electronic device and the second electronic device log in to a same account and access a same local area network, the second electronic device automatically installs and displays the first application widget, which can further improve security.

In a possible implementation, the first information includes a first download link and a widget identifier of the first application widget, and the first download link is a link for downloading installation packages of all released application widgets in an application market. That the second electronic device automatically installs and displays the first application widget based on the first information specifically includes: The second electronic device downloads, based on the first download link, the widget identifier of the first application widget, and a device type of the second electronic device, the installation package of the first application widget adapted to the second electronic device; and the second electronic device automatically installs and displays the first application widget based on the installation package of the first application widget adapted to the second electronic device.

In this way, the second electronic device may automatically install and display the application widget based on a download link and a widget identifier of the application widget shared by the another electronic device through the application market, which is simple and convenient. In this case, before installing and displaying the first application widget, the second electronic device may not need to determine whether the first electronic device meets the first condition.

In a possible implementation, the first information includes a second download link, and the second download link is a link for downloading the installation package of the first application widget adapted to the second electronic device. That the second electronic device automatically installs and displays the first application widget based on the first information specifically includes: The second electronic device downloads, based on the second download link, the installation package of the first application widget adapted to the second electronic device; and the second electronic device automatically installs and displays the first application widget based on the installation package of the first application widget adapted to the second electronic device.

In this way, the second electronic device may automatically install and display the application widget based on the download link of the application widget shared by the another electronic device through the application market, which is simple and convenient. In this case, before installing and displaying the first application widget, the second electronic device may not need to determine whether the first electronic device meets the first condition.

In a possible implementation, before that the second electronic device automatically installs and displays the first application widget based on the first information, the method further includes: The second electronic device determines that the first application widget is not installed on the second electronic device.

In this way, when the first application widget has been installed on the second electronic device, repeated installation may not be required. In this case, the second electronic device may add the first application widget to the desktop, and run and display the first application widget, to help the user view the first application widget.

In a possible implementation, before that the second electronic device receives first information sent by a first electronic device, the method further includes: The second electronic device establishes a communication connection to the first electronic device, and determines that the first electronic device is a trusted device.

In this way, the first information sent by the first electronic device is received after it is determined that the first electronic device is the trusted device, which can improve security.

In a possible implementation, before that the second electronic device automatically installs and displays the first application widget based on the first information, the method further includes: The second electronic device displays prompt information, where the prompt information is used to prompt the user to install the first application widget.

In this way, the user may determine, based on the prompt information, whether to install the application widget. When the user agrees to install the first application widget, the second electronic device installs the first application widget, which may give the user more autonomy, is generally used in a scenario in which the second electronic device and the first electronic device do not log in to a same account, and may specifically refer to displaying the prompt information when the first electronic device does not meet the first condition.

According to a third aspect, an embodiment of this application provides a communication system. The communication system includes a first electronic device and a second electronic device. The first electronic device is configured to display a first application widget; the first electronic device is further configured to: detect an operation of sharing the first application widget by a user with the second electronic device, and send first information to the second electronic device in response to the operation; the second electronic device is configured to receive the first information; and the second electronic device is further configured to install and display the first application widget based on the first information.

In a possible implementation, that the second electronic device is further configured to install and display the first application widget based on the first information specifically includes: The second electronic device automatically installs and displays the first application widget based on the first information when determining that the first electronic device meets a first condition, where the first condition includes: the first electronic device and the second electronic device log in to a same account.

In a possible implementation, the first information includes a first download link and a widget identifier of the first application widget, the first download link is a link for downloading installation packages of all released application widgets in an application market, and that the second electronic device is further configured to install and display the first application widget based on the first information specifically includes: The second electronic device downloads, based on the first download link, the widget identifier of the first application widget, and a device type of the second electronic device, an installation package of the first application widget adapted to the second electronic device; and the second electronic device installs and displays the first application widget based on the installation package of the first application widget adapted to the second electronic device.

In a possible implementation, the first information includes a second download link, the second download link is a link for downloading an installation package of the first application widget adapted to the second electronic device, and that the second electronic device is further configured to install and display the first application widget based on the first information specifically includes: The second electronic device downloads, based on the second download link, the installation package of the first application widget adapted to the second electronic device; and the second electronic device automatically installs and displays the first application widget based on the installation package of the first application widget adapted to the second electronic device.

According to a fourth aspect, an embodiment of this application provides an electronic device. The electronic device includes one or more processors and one or more memories, where the one or more memories are coupled to the one or more processors, the one or more memories are configured to store computer program code, the computer program code includes computer instructions, and when the one or more processors execute the computer instructions, the electronic device is enabled to perform the method according to any one of the possible implementations of the first aspect or the second aspect.

According to a fifth aspect, an embodiment of this application provides a computer storage medium. The computer storage medium stores a computer program, the computer program includes program instructions, and when the program instructions are run on an electronic device, the electronic device is enabled to perform the method according to any one of the possible implementations of the first aspect or the second aspect.

According to a sixth aspect, an embodiment of this application provides a computer program product. When the computer program product runs on a computer, the computer is enabled to perform the method according to any one of the possible implementations of the first aspect or the second aspect.

### BRIEF DESCRIPTION OF DRAWINGS

FIG. 1 is a schematic diagram of displaying an application widget on a desktop by a local device according to an embodiment of this application;
FIG. 2 is a schematic diagram of a communication system according to an embodiment of this application;
FIG. 3A is a schematic diagram of a software architecture of a local device according to an embodiment of this application;
FIG. 3B is a schematic diagram of another software architecture of a local device according to an embodiment of this application;
FIG. 4 is a schematic flowchart of an application widget sharing method according to an embodiment of this application;
FIG. 5A and FIG. 5B are a schematic diagram of a possible coordination manner between internal modules in a process in which a local device establishes a trusted connection to a remote device according to an embodiment of this application;
FIG. 6A to FIG. 6C are schematic diagrams of a group of user interfaces in a process in which a local device shares an application widget with a remote device according to an embodiment of this application;
FIG. 7A to FIG. 7D are schematic diagrams of a group of user interfaces in a process in which a remote device receives and displays an application widget shared by a local device according to an embodiment of this application;
FIG. 8A and FIG. 8B are a schematic diagram of a possible coordination manner between internal modules in a process in which a local device shares an application widget with a remote device according to an embodiment of this application;
FIG. 9A to FIG. 9C are schematic diagrams of another group of user interfaces in a process in which a local device shares an application widget with a remote device according to an embodiment of this application; and
FIG. 10 is a schematic diagram of a structure of a local device according to an embodiment of this application.

### DESCRIPTION OF EMBODIMENTS

The following clearly and completely describes technical solutions in embodiments of this application with reference to accompanying drawings in embodiments of this application. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of' means two or more.

It should be understood that the terms "first", "second", and the like in the specification, the claims, and the accompanying drawings of this application are intended to distinguish between different objects, but are not intended to describe a specific order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this application means that a particular characteristic, structure, or feature described with reference to an embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in this application may be combined with another embodiment.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language like Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphic manner. The user interface may be a visual interface element like a text, an icon, a button, a menu, a tab, a text box, a dialog box, a status bar, a navigation bar, or a widget that is displayed on a display of the electronic device.

For ease of understanding, a concept of "application widget" in embodiments of this application is first described.

The application widget (Application Widget, App Widget) may also be referred to as a card, a service card, a service widget (Service Widget), an application widget, or an application widget, and is a small window or widget provided by a service module A (a service end, for example, an application) of an electronic device on an interface of a module B (a host end, for example, a desktop). The application widget is usually configured to display important information of an application (Application) on a desktop of the electronic device to implement a service feature of the application. A user can use the application widget through a shortcut gesture, to access a service in one step and reduce level jumps.

The application widget is an interface display form, and is usually independently customized by a third party (for example, a developer of an application), that is, is customized independently of the application corresponding to the application widget. The application widget may be configured to be embedded into another application as a part of an interface of the another application for display. For example, a user (for example, a desktop application) may be allowed to embed the application widget into an interface of the user (for example, an activity component of an Android operating system) for display. In other words, for any application, an application widget corresponding to the application is independent of the application. To be specific, the application widget corresponding to the application is not an application interface of the application, but the application widget corresponding to the application may perform data interaction with the application to update or add important information of the application or an operation to the application widget, to access a service in one step and reduce experience levels. For example, an application widget that is set based on the Android operating system may be referred to as an ongoing card (ongoing card), and an application widget that is set based on a Harmony operating system may be referred to as a service card, for example, form ability (FA).

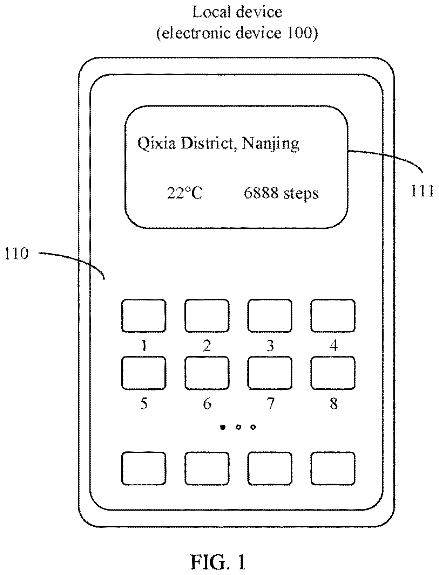

FIG. 1 shows an example of an application widget that is provided by an electronic device 100 and that is displayed on a user interface 110 (namely, a desktop). Usually, the application widget may display one or more types of information. It can be seen from FIG. 1 that an application widget 111 displays three types of information: location information (for example, Qixia District, Nanjing), temperature information (for example, 22°C), and step count information (for example, 6888 steps). In this way, the application widget is displayed on the desktop, so that a user can directly view the foregoing information displayed on the application widget without a need of entering an application that provides the application widget to view the foregoing information, which is convenient and quick. In addition, the user may also directly tap the application widget to enter the application that provides the application widget to view more details or perform another task.

The application widget is merely a word used in embodiments of this application, and a meaning represented by the application widget has been recorded in embodiments of this application. A name of the application widget does not constitute any limitation on embodiments of this application.

Currently, application widgets can only be used on a local device. If the user wants to use these application widgets on another remote device, the user needs to manually install applications that provide these application widgets on the remote device, then select a corresponding application widget through a widget provided by a desktop to add the corresponding application widget to the desktop for display, and finally may need to manually set a configuration of the application widget (for example, set a display location of a weather application widget, or set a display country of a calendar application widget) according to a user requirement. These operations are complex, and flexibility is poor. The user cannot share the application widget of the local device with the remote device in the same way as sharing pictures or files. In other words, the user cannot flexibly process the application widget, and lacks experience of using the application widget across devices. As a result, an application scenario of the application widget is limited, and user experience is poor.

Embodiments of this application provide an application widget sharing method. An electronic device (namely, a local device) may establish a trusted connection to one or more remote devices. Through the trusted connection, the electronic device may share, with the one or more remote devices, an application widget provided by the local device, so that a problem that the local device cannot share the application widget with the remote device can be resolved, and the application widget shared with the remote device can be directly used without a need of manually setting the application widget by a user. This simplifies user operations and improves user experience.

The following first describes a communication system provided in embodiments of this application.

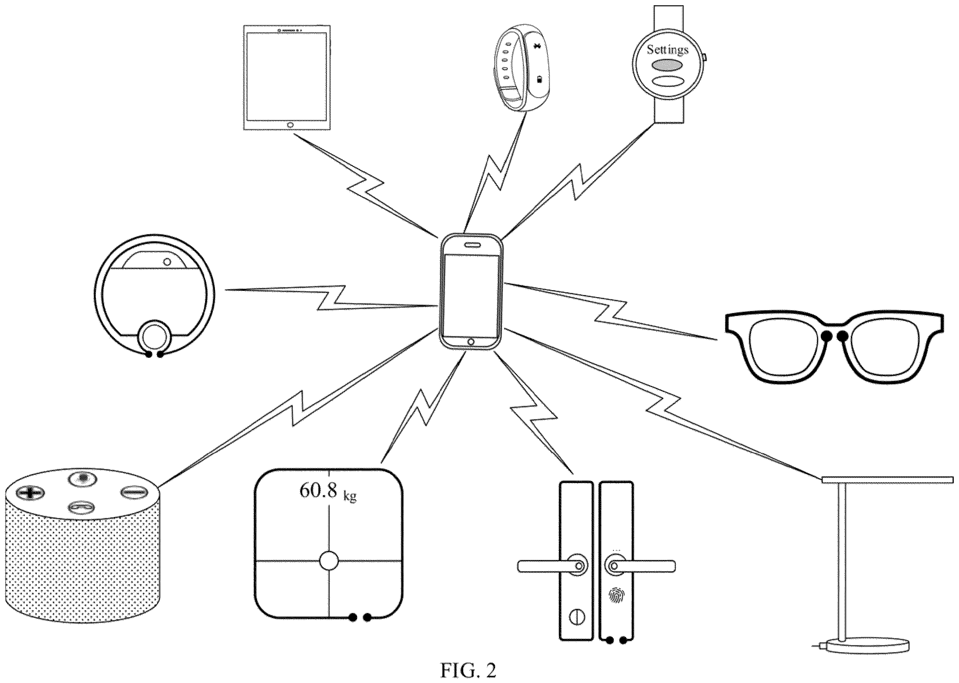

**FIG. 2** **shows an example of a communication system according to an embodiment of this application.**

As shown in FIG. 2, the communication system may include a plurality of electronic devices. The communication system may also be referred to as a distributed system.

The plurality of electronic devices included in the communication system are all intelligent terminal devices, and may be of various types. Specific types of the plurality of electronic devices are not limited in this embodiment of this application. For example, the plurality of electronic devices may include a mobile phone, may further include a tablet computer, a desktop computer, a laptop computer, a handheld computer, a notebook computer, a smart screen, a wearable device, an augmented reality (Augmented Reality, AR) device, a virtual reality (Virtual Reality, VR) device, an artificial intelligence (Artificial Intelligence, AI) device, a head unit, a smart headset, or a game console, and may further include an internet of things (Internet of Things, IOT) device, a smart household appliance like a smart water heater, a smart lamp, or a smart air conditioner, a smart fitness machine, a smart medical device like a blood pressure machine, or the like.

The plurality of electronic devices in the communication system may be connected to each other by logging in to a same account. For example, the plurality of electronic devices may log in to a same Huawei account, and are remotely connected to and communicated with each other by using a server. The account may be a mobile phone number, an email address, a userdefined user name, a user name allocated by an APP server, a user name used for login in an APP in the electronic device, or the like.

The plurality of electronic devices in the communication system may alternatively log in to different accounts, but are connected in a binding manner. After an electronic device logs in to an account, the electronic device may be bound to, in a device management application, other electronic devices that log in to different accounts or that do not log in to, and then these electronic devices may communicate with each other through the device management application.

The plurality of electronic devices in the communication system may alternatively establish connections in a manner of scanning a two-dimensional code, near field communication (near field communication, NFC) OneHop, searching for a Bluetooth device, or the like. This is not limited herein.

In general, communication connections established between the plurality of electronic devices in the communication system may include but are not limited to a wired connection, a wireless connection like a Bluetooth (Bluetooth, BT) connection, a wireless local area network (wireless local area network, WLAN) connection like a wireless fidelity point-to-point (wireless fidelity point to point, Wi-Fi P2P) connection, a near field communication (near field communication, NFC) connection, an infrared (infrared, IR) connection, a remote connection (for example, a connection established by using a server), and the like.

In addition, the plurality of electronic devices in the communication system may be connected to and communicate with each other in any one of the foregoing manners. This is not limited in this embodiment of this application. In other words, the electronic devices in the communication system may establish a network (namely, perform networking) according to a specific communication protocol and a networking policy, so that the electronic devices in the communication system can communicate with each other.

Different software operating systems (Operating Systems, OSs) may be configured for the plurality of electronic devices in the communication system, including but not limited to HarmonyOS^{®}, Android^{®}, iOS^{®}, Windows^{®}, Linux^{®}, and the like. HarmonyOS^{®} is Huawei's HarmonyOS. A same software operating system, for example, HarmonyOS^{®}, may be configured for the plurality of electronic devices. When software operating systems of the plurality of electronic devices are all HarmonyOS^{®}, the communication system may be considered as a super terminal.

The following describes schematic diagrams of two software architectures of an electronic device 100 according to an embodiment of this application.

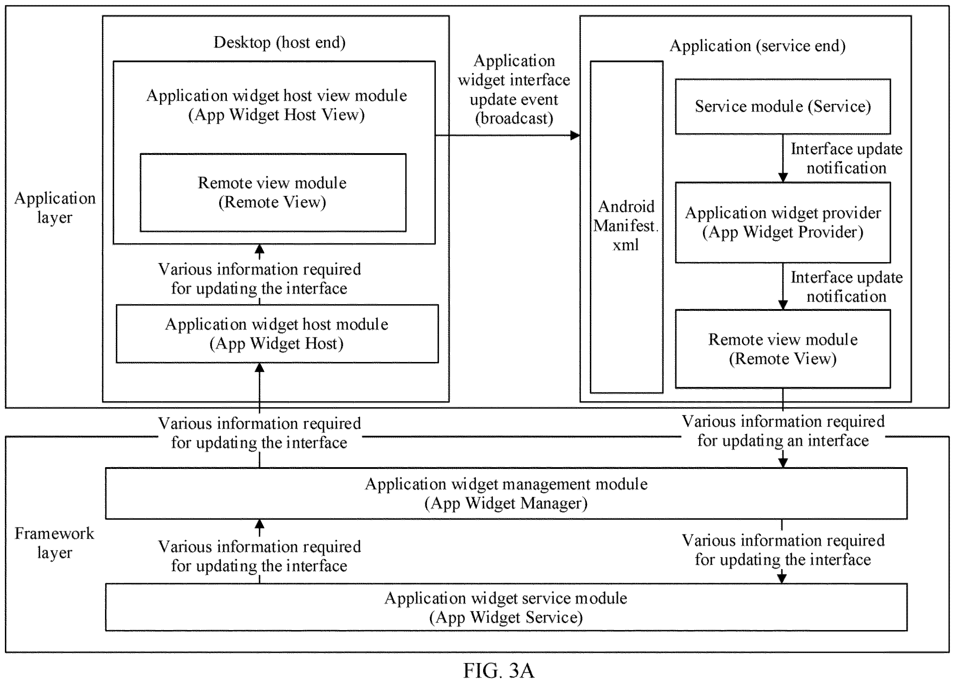

**FIG. 3A** **shows an example of a software architecture (an Android system is used as an example) of an electronic device 100 in an application widget display process according to an embodiment of this application.**

As shown in FIG. 3A, the electronic device 100 may include an application layer and a framework layer.

The application layer may include a series of applications. As shown in FIG. 3A, the application layer may include a desktop (host end) and a service application (service end) other than the desktop.

The desktop (host end) may include an application widget host module (App Widget Host) and an application widget host view module (App Widget Host View).

The application widget host module is an interface provided by the desktop (host end), may be configured to support embedding of an application widget into the desktop (host end), and may store interface logic information of the application widget. The application widget host view module includes a remote view module (Remote View). The application widget host view module may be configured to display the application widget based on a description about the application widget in the remote view module, and the remote view module may be configured to obtain the interface logic information of the application widget stored in the application widget host module, so that the application widget is displayed in the application widget host view module.

The service application (service end) other than the desktop may include a service module (Service), an application widget provider (App Widget Provider), a remote view module (Remote View), an AndroidManifest.xml file, and the like.

The service module may be configured to provide a related service required by the application. The application widget provider is a broadcast receiver (Broadcast Receiver), and may be configured to receive a broadcast message for updating an application widget interface. The remote view module may be configured to describe view information of an application widget, for example, various information required for updating the application widget interface. The AndroidManifest.xml file includes configuration information of the application, and may be used to describe each module (for example, the service module, the application widget provider, and the remote view module) in the application.

The framework layer may provide an application programming interface (application programming interface, API) and a programming framework for applications at the application layer. The framework layer includes some predefined functions.

As shown in FIG. 3A, the framework layer may include an application widget management module (App Widget Manager), an application widget service module (App Widget Service), and the like.

The application widget management module may be configured to provide a channel for application widget data and event interaction for the service end and the host end. The application widget service module may be configured to be responsible for managing an application widget (for example, loading an application widget, deleting an application widget, and processing a timing event).

Still refer to FIG. 3A. When the application widget interface needs to be updated, the application widget host view module of the host end sends an application widget interface update event to the service end in a form of a broadcast message. The service end creates a service through the service module and sends an interface update notification to the remote view module through the application widget provider. The remote view module generates various information required for updating an interface, and sends the various information required for updating an interface to the application widget management module at the framework layer. The application widget management module invokes some methods provided by the application widget service module to send the various information required for updating an interface to the application widget host module of the host end. The application widget host module updates the application widget based on the various information required for updating an interface, and displays an updated application widget interface on the host end through the application widget host view module.

It can be seen that the application widget management module at the framework layer provides the channel for application widget data and event interaction for the host end and the service end. The application widget is embedded into a container (Container) provided by the host end, to complete automatic display of service end data on the host end and an event processing process. The container is a software program, and may provide a running environment for an application widget and manage a life cycle of the application widget.

However, currently, the application widget management module only implements management of application widgets of a local device, but does not implement management of cross-device application widgets. In addition, interface logic information of the application widgets and modules required for event processing are all packaged in an application package, and are not separated from the application package.

Based on the foregoing problem, an embodiment of this application provides another software architecture of the electronic device 100.

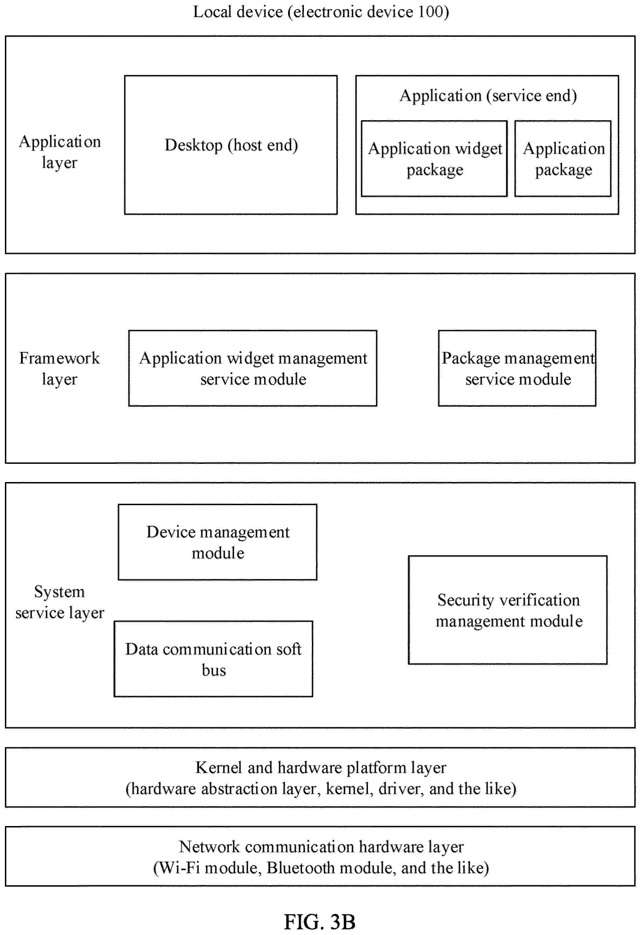

**FIG. 3B** **shows an example of a software architecture of an electronic device 100 related to an application widget sharing method according to an embodiment of this application.**

As shown in FIG. 3B, the electronic device 100 may include an application layer, a framework layer, a system service layer, a kernel and hardware platform layer, and a network communication hardware layer.

The application layer may include a series of applications. As shown in FIG. 3B, the application layer may include a desktop (host end) and a service application (service end) other than the desktop.

The desktop (host end) can provide a container into which application widgets are injected, display the application widgets, and support embedding the application widgets into the desktop and run the application widgets on the desktop.

Different from that in FIG. 3A, the service application (service end) other than the desktop may include an application widget package (also referred to as an installation package of an application widget) and an application package (also referred to as an installation package of an application), that is, the application widget package is separated from the application package, and the application widget package includes only service logic and services related to the application widget. In this way, the application widget package may be decoupled from the application package, may be lightened, and may be installed independently. In other words, even if the application corresponding to the application widget is not installed on the electronic device, the application widget may be installed on the electronic device.

Because the application widget is not an independent user interface program, the application widget can run only when the application widget is embedded in a program (namely, the host end). In this embodiment of this application, the host end of the application widget may be the desktop, that is, the application widget may be embedded in the desktop for running.

It may be understood that in this embodiment of this application, that the desktop is used as the host end of the application widget is merely used as an example, and the host end of the application widget may alternatively be another application. This is not limited in this embodiment of this application.

The framework layer may provide an application programming interface (application programming interface, API) and a programming framework for applications at the application layer. The framework layer includes some predefined functions.

As shown in FIG. 3B, the framework layer may include an application widget management service module and a package management service module (Package Manager Service, PMS).

The application widget management service module may be invoked by the desktop (host end), or may obtain the application widget package from the package management service module, or may invoke the device management service module.

The package management service module may be configured to manage various application widget packages and application packages, and may provide capabilities such as package installation, package registration, and package information management.

The system service layer is a set of core capabilities of the system. The system service layer can provide services for applications at the application layer through the framework layer.

As shown in FIG. 3B, the system service layer may include a device management module, a data communication soft bus, and a security verification management module.

The device management module may be configured to manage device information of a local device, device information of one or more remote devices that establish trusted connections to the local device, and the like, and may provide a related API for an upper-layer module.

The device information of the one or more remote devices that establish the trusted connections to the local device may be obtained by the device management module by relying on the data communication soft bus.

The data communication soft bus may be configured to provide capabilities such as device registration, device discovery, device connection, and device communication based on network connection information.

The security verification management module may be configured to verify validity of a remote device based on information such as a device certificate, an account, and a signature, to ensure that the remote device is a trusted device, provide a related API, and further perform trusted verification on application widget package information.

The data communication soft bus performs device networking based on a plurality of basic network communication protocols through basic network devices such as a Wi-Fi module and a Bluetooth module, performs trusted verification on an access device (including but not limited to a device that accesses a same local area network with the local device and a device that logs in to a same account with the local device) through the security verification management module, stores a trusted device information list (namely, a list of device information of one or more remote devices that establish the trusted connections to the local device), and provides a basic service (for example, provides the trusted device information list) for the device management module. It is a core basic module in a cross-device scenario.

As shown in FIG. 3B, the kernel and hardware platform layer may include a hardware abstraction layer (Hardware Abstraction Layer), a kernel, a driver, and the like.

The hardware abstraction layer runs in user space (User Space), encapsulates a kernel layer driver, and provides an interface for an upper layer to invoke.

The kernel layer is a layer between hardware and software. The kernel layer may include a display driver, a camera driver, an audio driver, a sensor driver, a Bluetooth driver, and the like. In some embodiments, the kernel and hardware platform layer may include a kernel abstraction layer (kernel abstract layer, KAL) and a driver subsystem. The KAL includes a plurality of kernels such as a kernel of a Linux system Linux Kernel and a lightweight internet of things system kernel LiteOS. The driver subsystem may include hardware driver foundation (Hardware Driver Foundation, HDF). The hardware driver foundation can allow unified access from peripheral devices and provide foundation for driver development and management. The kernel layer having a plurality of kernels may select a corresponding kernel for processing according to a system requirement.

As shown in FIG. 3B, the network communication hardware layer may include hardware such as a Wi-Fi module and a Bluetooth module, provide a network connection hardware capability, and be configured to implement communication between different devices.

It may be understood that FIG. 3A and FIG. 3B are merely examples, and should not impose any limitation on the software architecture of the electronic device 100 in embodiments of this application. For example, in some other embodiments of this application, the system architecture of the electronic device 100 may also use a hierarchical structure different from that in the examples shown in FIG. 3A and FIG. 3B, or each layer may further include more or fewer modules, a combination of a plurality of different module manners, or the like. This is not limited in embodiments of this application. The electronic device 100 may further include all or some modules shown in FIG. 3A and all or some modules shown in FIG. 3B. This is not limited in embodiments of this application.

It is easy to understand that a software architecture of another electronic device in embodiments of this application may be the same as or different from the software architecture of the electronic device 100. This is not limited in embodiments of this application.

Based on the software architecture shown in FIG. 3B, the following describes in detail a specific procedure of an application widget sharing method according to an embodiment of this application.

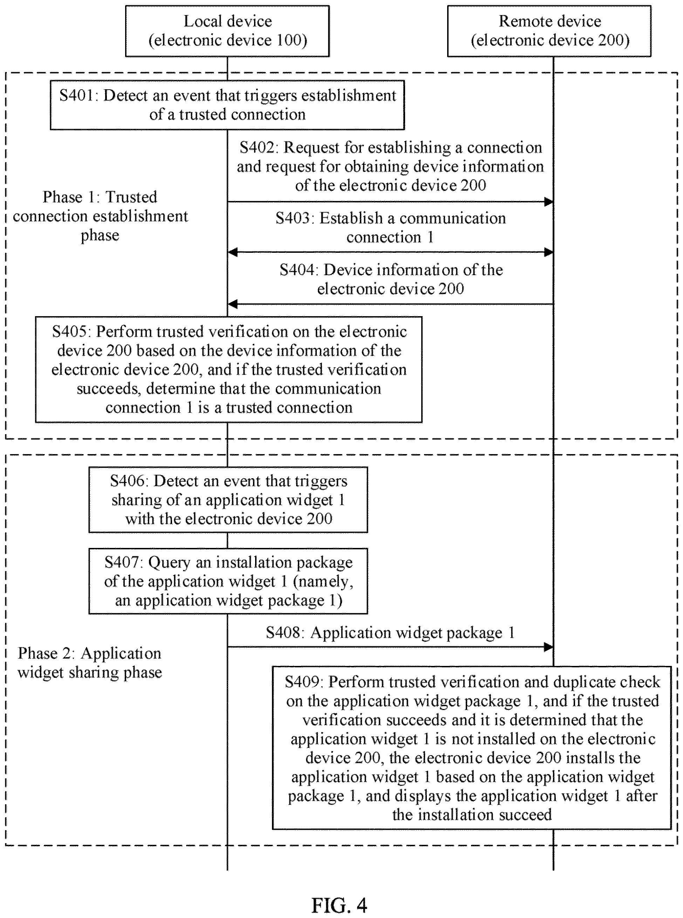

**FIG. 4** **shows an example of a specific procedure of an application widget sharing method according to an embodiment of this application.**

As shown in FIG. 4, the method may be applied to a communication system including an electronic device 100 (namely, a local device) and an electronic device 200 (namely, a remote device). Specific steps of the method are described in detail below.

First, in this embodiment of this application, a trusted connection needs to be established between the electronic device 100 and the electronic device 200, and steps in Phase 2 can be continued only after a trusted communication connection is established, to implement an objective of sharing an application widget across devices.

For example, a possible implementation of establishing a trusted connection between the electronic device 100 and the electronic device 200 may be an implementation described in Phase 1 (step S401 to step S405). This is described in detail below.

### Phase 1: Trusted connection establishment phase

S401 and S402: The electronic device 100 detects an event that triggers establishment of a trusted connection, and in response to the event, the electronic device 100 sends, to the electronic device 200, a request for establishing a connection and a request for obtaining device information of the electronic device 200.

The event that triggers establishment of a trusted connection may be an operation (for example, a gesture) or an instruction (for example, a voice instruction) that a user triggers, on a desktop, viewing a device information list of the remote device, or an operation that a user triggers, through an interface of a "Settings" application, establishment of a communication connection between the electronic device 100 and the electronic device 200, or the like. The foregoing event or manner of triggering establishment of a trusted connection is not limited in this embodiment of this application.

In some embodiments, establishment of a trusted connection between the electronic device 100 and the electronic device 200 may be further triggered based on a specific occasion (for example, after the system is started or restarted, after a screen is locked or unlocked, or after the system is updated) of the system.

In some other embodiments, establishment of a trusted connection between the electronic device 100 and the electronic device 200 may be further triggered based on a fixed occasion. For example, the electronic device 100 may send, to the electronic device 200 every a period of time, the request for establishing a connection and the request for obtaining the device information of the electronic device 200, that is, trigger, based on a fixed cycle, establishment of a trusted connection between the electronic device 100 and the electronic device 200.

S403 and S404: The electronic device 200 establishes a communication connection 1 with the electronic device 100, and sends the device information of the electronic device 200 to the electronic device 100.

Specifically, after receiving the request for establishing a connection and the request for obtaining the device information of the electronic device 200 that are sent by the electronic device 100, the electronic device 200 may establish the communication connection 1 to the electronic device 100, and send the device information of the electronic device 200 to the electronic device 100.

The device information of the electronic device 200 may include but is not limited to information such as a device type, a device name, a device identifier (Identity Document, ID), a sequence number, a media access control address, a device model, and a connection manner of the electronic device 200. This is not limited in this embodiment of this application.

Both the request for establishing a connection and the request for obtaining the device information of the electronic device 200 may carry device information of the electronic device 100. The device information of the electronic device 100 may include but is not limited to information such as a device type, a device name, a device ID, a sequence number, a media access control address, a device model, and a connection manner of the electronic device 100. This is not limited in this embodiment of this application.

S405: The electronic device 100 performs trusted verification on the electronic device 200 based on the device information of the electronic device 200, and if the trusted verification succeeds, determines that the communication connection 1 is a trusted connection.

Specifically, after receiving the device information of the electronic device 200 sent by the electronic device 200, the electronic device 100 may perform trusted verification on the electronic device 200 based on the device information of the electronic device 200 (including but not limited to a scenario in which the electronic device 100 and the electronic device 200 access a same local area network and/or log in to a same account). Information verified in a trusted verification process includes but is not limited to information such as a device certificate, a login account, a signature, and an accessed network of the electronic device 200.

Further, if the trusted verification succeeds, it is determined that the electronic device 200 is a trusted device, that is, the communication connection 1 is a trusted connection.

In some embodiments, the electronic device 200 may also perform trusted verification on the electronic device 100 in the foregoing manner.

In this case, the electronic device 100 and the electronic device 200 complete establishment of a trusted connection. Further, each step in Phase 2 may be performed based on the trusted connection.

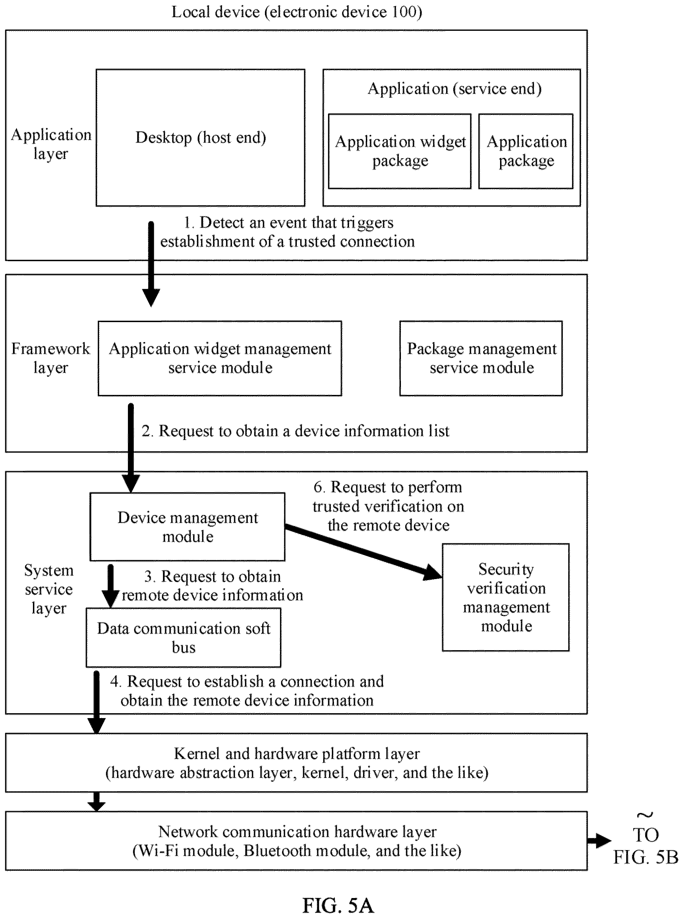

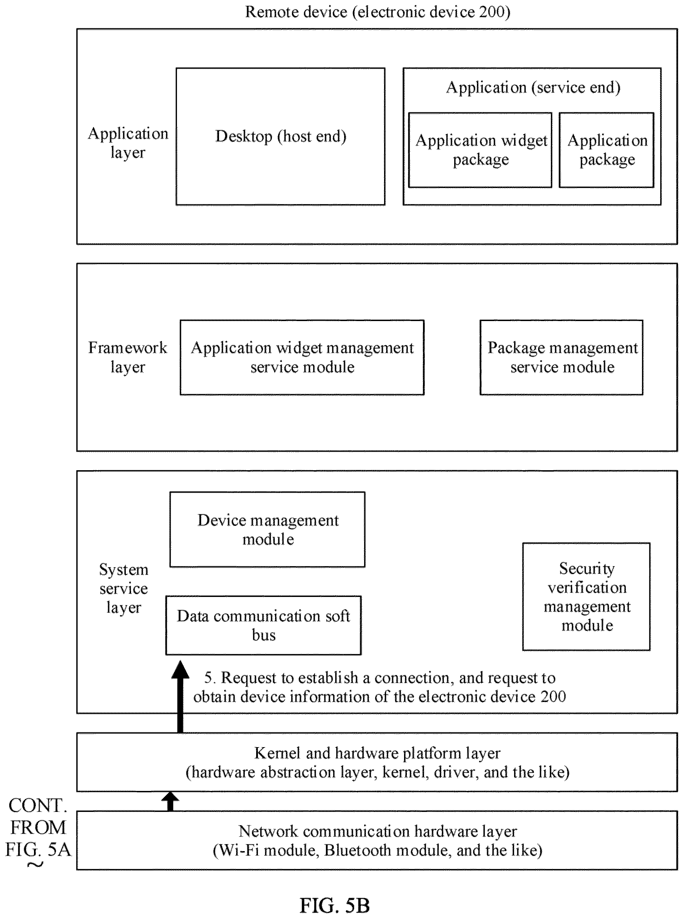

**With reference to** **FIG. 5A** **and** **FIG. 5B****, the following describes an example of a possible coordination manner between internal modules in the electronic device 100 and the electronic device 200 in the trusted connection establishment phase.**

Step 1: A desktop of the electronic device 100 detects an event that triggers establishment of a trusted connection, and then the desktop may invoke an application widget management service module of the electronic device 100 to obtain a device information list.

The event that triggers establishment of a trusted connection may be an operation (for example, a gesture) or an instruction (for example, a voice instruction) that a user triggers, on the desktop, viewing the device information list of the remote device, or the like. The foregoing event that triggers establishment of a trusted connection is not limited in this embodiment of this application.

Step 2: The application widget management service of the electronic device 100 may invoke a device management module to request the device management module to obtain the device information list.

Step 3: The device management module of the electronic device 100 may invoke a data communication soft bus to request to obtain remote device information (for example, device information of the electronic device 200).

Step 4: The data communication soft bus of the electronic device 100 may request, through a kernel and hardware platform layer and a network communication hardware layer, the electronic device 200 to establish a connection and request to obtain remote device information.

Step 5: A data communication soft bus of the electronic device 200 may receive, through a kernel and hardware platform layer and a network communication hardware layer, a request for establishing a connection and a request for obtaining the remote device information that are sent by the electronic device 100, and then the electronic device 200 may establish a connection to the electronic device 100 by invoking the data communication soft bus of the electronic device 200, and send the device information of the electronic device 200 to the electronic device 100.

Step 6: After the electronic device 100 receives the device information of the electronic device 200, the device management module of the electronic device 100 may invoke a security verification management module, to request the security verification management module to perform trusted verification on the electronic device 200. If the trusted verification succeeds, it may be determined that the electronic device 200 is a trusted device, and may further be determined that a connection established between the electronic device 100 and the electronic device 200 is a trusted connection.

After the electronic device 100 establishes the trusted connection to the electronic device 200, the electronic device 100 may share an application widget on the electronic device 100 with the electronic device 200 based on the trusted connection.

For example, a possible implementation in which the electronic device 100 shares an application widget on the electronic device 100 with the electronic device 200 based on the trusted connection established to the electronic device 200 may be an implementation described in Phase 2 (step S406 to step S409). This is described in detail below.

### Phase 2: Application widget sharing phase

S406 and S407: The electronic device 100 detects an event that triggers sharing of an application widget 1 with the electronic device 200, and in response to the event, the electronic device 100 queries an installation package of the application widget 1 (namely, an application widget package 1).

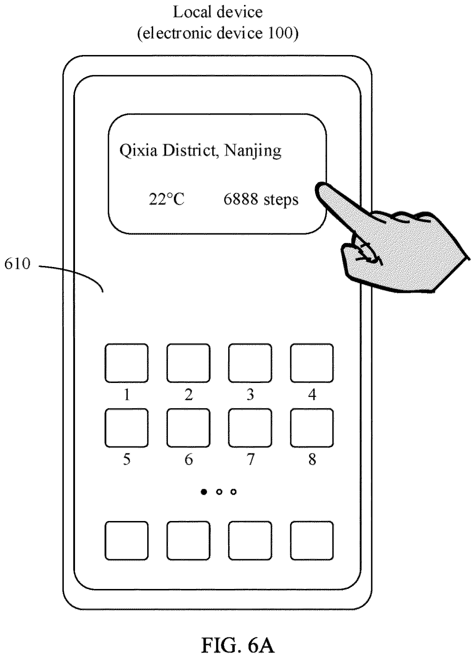

For example, as shown in FIG. 6A, a user interface 610 shown in FIG. 6A may be a desktop of the electronic device 100. It is assumed that the application widget 1 is an application widget displayed on the desktop of the electronic device 100 in FIG. 6A. If the user wants to share the application widget 1 with another electronic device (for example, the electronic device 200), the electronic device 100 may detect an operation (for example, a touch and hold operation) of the user for the application widget 1, and in response to the operation, the electronic device 100 may display a window 620 shown in FIG. 6B as an example.

As shown in FIG. 6B, the window 620 may include an option 621 (for example, a "Share" option), and the option 621 may be used to indicate the user to share the application widget 1 with another electronic device.

Optionally, the window 620 may further include an option 622 (for example, a "Remove" option), and the option 622 may be used to indicate the user to remove the application widget 1 from the desktop of the electronic device 100.

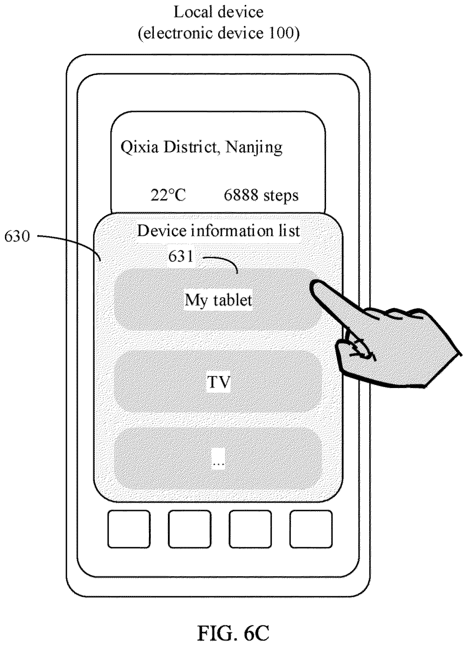

Still refer to FIG. 6B. If the user wants to share the application widget 1 with another electronic device (for example, the electronic device 200), the electronic device 100 may detect an operation (for example, a tap operation) of the user for the option 621, and in response to the operation, the electronic device 100 may display a window 630 shown in FIG. 6C as an example.

As shown in FIG. 6C, the window 630 may include a device information list, and the device information list may include an option (for example, a "My tablet" option 631 or a "TV" option) corresponding to device information of one or more remote devices that establish trusted connections to the electronic device 100.

Still refer to FIG. 6C. It is assumed that the electronic device 200 is "My tablet". If the user wants to share the application widget 1 with the electronic device 200, the electronic device 100 may detect an operation (for example, a tap operation) of the user for the "My tablet" option 631. In response to the operation, the electronic device 100 may query the installation package of the application widget 1 (namely, the application widget package 1), to send the application widget package 1 to the electronic device 200 in a subsequent step.

In some embodiments, the electronic device 100 may further support the user in simultaneously selecting a plurality of devices (for example, simultaneously selecting "My tablet" and "TV") from the device information list to share the application widget 1.

It should be noted that an occasion for the electronic device 100 to query the installation package of the application widget 1 (namely, the application widget package 1) is not limited in embodiments of this application. For example, the electronic device 100 may query the installation package of the application widget 1 after the user performs an operation on the option 621 (for example, the "Share" option) shown in FIG. 6B. For another example, the electronic device 100 may alternatively query the installation package of the application widget 1 after the user performs an operation on the option (for example, the "My tablet" option 631) corresponding to the device information shown in FIG. 6C. This is not limited in embodiments of this application.

In some embodiments, the event that triggers establishment of a trusted connection in Phase 1 (the trusted connection establishment phase) may be an event that the user taps the option 621 (for example, the "Share" option) shown in FIG. 6B.

It should be noted that, in embodiments of this application, the operations, shown in FIG. 6A and FIG. 6B, of triggering sharing of the application widget 1 by the electronic device 100 are used as examples. In some embodiments, the operation of triggering sharing of the application widget 1 by the electronic device 100 may alternatively be a specific operation or a gesture preset by the electronic device 100. This is not limited in embodiments of this application.

It should be noted that, in embodiments of this application, the electronic device 100 supports the user in first selecting an application widget to be shared, and then selecting a device with which the selected application widget is to be shared. In some embodiments, the electronic device 100 may further support the user in first selecting a device to be shared, and then selecting one or more application widgets to be shared with the selected device.

**S408:** The electronic device 100 sends the application widget package 1 to the electronic device 200.

Specifically, after determining that the user wants to share the application widget 1 with the electronic device 200 and finding the application widget package 1, the electronic device 100 may send the application widget package 1 to the electronic device 200, so that the electronic device 200 may install the application widget 1 based on the application widget package 1 in a subsequent step.

In some embodiments, when sending the application widget package 1 to the electronic device 200, the electronic device 100 may further send device information of the electronic device 100 (for example, a device identifier of the electronic device 100) to the electronic device 200, so that the electronic device 200 learns which electronic device sends the application widget package 1.

In some embodiments, if the electronic device 100 runs the application widget 1, data (which may also be referred to as status data or user data) generated when the electronic device 100 runs the application widget 1 may be displayed on the application widget 1, for example, location information (for example, "Qixia District, Nanjing") of the user, temperature information (for example, "22°C") of a location of the user, and step count information (for example, 6888 steps) generated by the user. In this case, when sending the application widget package 1 to the electronic device 200, the electronic device 100 may further send, to the electronic device 200, the data generated when the electronic device 100 runs the application widget 1, so that the electronic device 200 may display, after the application widget 1 is installed in a subsequent step, the data generated when the electronic device 100 runs the application widget 1, to achieve an effect of cross-device transfer.

It is easy to understand that, because the installation package of the application widget sent by the electronic device 100 to the remote device is not necessarily applicable to electronic devices of all device types to install the application widget based on the installation package, in some embodiments, if the user wants to share the application widget with the remote device, when the user selects an electronic device to be shared, the device information list displayed by the electronic device 100 may include only device information of an electronic device that can support installation of the application widget by using the installation package of the application widget, or may display, in grayscale, device information of an electronic device that does not support installation of the application widget by using the installation package of the application widget. This can improve a success rate of sharing an application widget and user experience.

S409: The electronic device 200 performs trusted verification and duplicate check on the application widget package 1, and if the trusted verification succeeds and it is determined that the application widget 1 is not installed on the electronic device 200, the electronic device 200 installs the application widget 1 based on the application widget package 1, and displays the application widget 1 after the installation succeeds.

Specifically, after receiving the application widget package 1 sent by the electronic device 100, the electronic device 200 may perform trusted verification on the application widget package 1, to prevent the application widget package 1 from being maliciously tampered with. Information verified in a trusted verification process may include but is not limited to information such as a certificate and a signature.

If the trusted verification succeeds, the electronic device 200 may further perform duplicate check on the application widget package 1, to prevent repeated installation of the application widget 1. To be specific, if the application widget 1 has been installed on the electronic device 200 (that is, an installation package corresponding to the application widget 1 already exists on the electronic device 200), it indicates that the application widget package 1 sent by the electronic device 100 to the electronic device 200 is duplicate with the installation package corresponding to the application widget 1 that exists locally on the electronic device 200, and the electronic device 200 does not repeatedly install the application widget 1 based on the application widget package 1. If the application widget 1 is not installed on the electronic device 200 (that is, the installation package corresponding to the application widget 1 does not exist on the electronic device 200), it indicates that the application widget package 1 sent by the electronic device 100 to the electronic device 200 is not duplicate with the installation package corresponding to the application that exists locally on the electronic device 200, and the electronic device 200 installs the application widget 1 based on the application widget package 1, and may display the application widget 1 after the installation succeeds.

It is easy to understand that, if the trusted verification fails, the electronic device 200 does not perform duplicate check on the application widget package 1, and does not install the application widget 1 based on the application widget package 1.

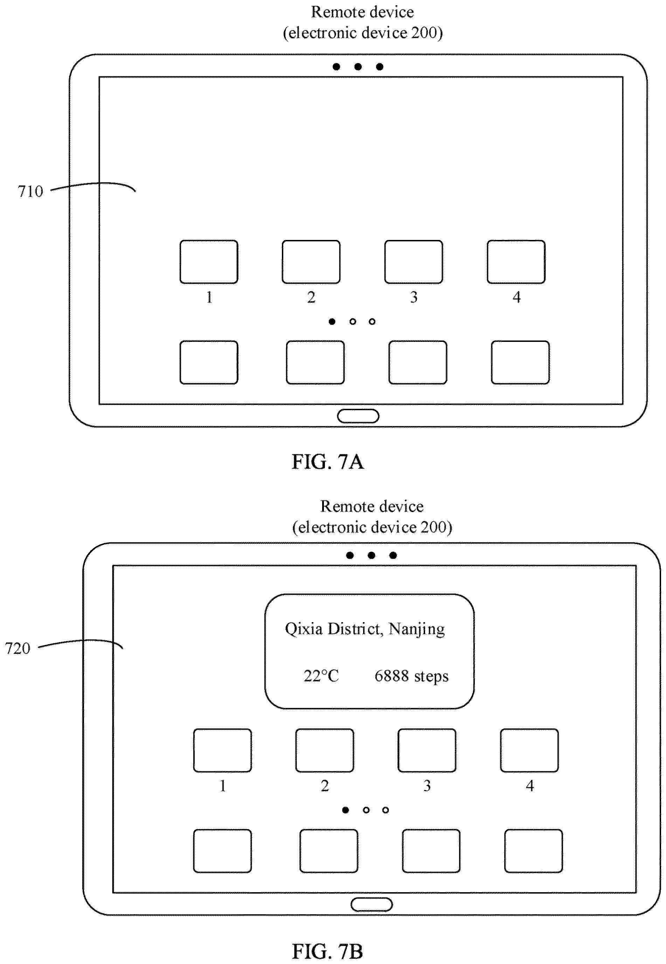

For example, an application widget is displayed on the desktop of the electronic device 200. Refer to FIG. 7A. FIG. 7A shows a user interface 710 displayed by the electronic device 200 before the electronic device 100 shares the application widget 1 with the electronic device 200. The user interface 710 may be the desktop of the electronic device 200. It can be seen that the application widget 1 is not displayed on the user interface 710, and it may also be considered that the application widget 1 is not installed on the electronic device 200.

Refer to FIG. 7B. FIG. 7B shows a user interface 720 displayed by the electronic device 200 after the electronic device 200 successfully installs the application widget 1 based on the application widget package 1. The installation is performed after the electronic device 100 shares the application widget 1 with the electronic device 200 and when the electronic device 200 determines that trusted verification succeeds and determines that the application widget 1 is not installed on the electronic device 200. The user interface 720 may be the desktop of the electronic device 200. It can be seen that, different from that on the user interface 710 shown in FIG. 7A, the application widget 1 is displayed on the user interface 720 shown in FIG. 7B. In other words, the application widget 1 shared by the electronic device 100 is installed on the electronic device 200, and the application widget 1 is injected into a container provided by the desktop of the electronic device 200.

After the electronic device 200 installs the application widget 1 shared by the electronic device 100, and injects the application widget 1 into the container (for example, the container provided by the desktop) provided by the electronic device 200, the application widget 1 may run on the electronic device 200, and status data may be refreshed to a container (for example, the container provided by the desktop) provided by a host end of the application widget 1, so that the status data may be displayed on the application widget 1 for the user to view.

The status data (or referred to as user data) may be data that is generated by the user of the electronic device 200 and that is obtained by the application widget 1. For example, the application widget shown in FIG. 7B may provide a function of displaying location information of the user, temperature information of a location of the user, and step count information generated by the user, and the status data may include the location information of the user (for example, "Qixia District, Nanjing"), the temperature information of the location of the user (for example, "22°C"), and the step count information (for example, 6888 steps) generated by the user.

In some embodiments, for example, in a scenario in which the electronic device 100 and the electronic device 200 log in to a same account, the status data of the application widget 1 displayed on the electronic device 200 may also be data generated when the electronic device 100 runs the application widget 1, and is cyclically sent to the electronic device 200. In other words, the electronic device 100 may update the status data to the electronic device 200 in real time, and the user may view the status data of the application widget 1 through the electronic device 100 or the electronic device 200, to achieve an effect of cross-device transfer. This can bring all-scenario experience to the user.

By implementing the method provided in the embodiment shown in FIG. 4, an application widget can be shared from the local device to the remote device through one tap, and the remote device can install, run, and display the application widget shared from another electronic device without a user operation in the entire process, which is flexible and convenient, simplifies user operations, and improves user experience.

In this embodiment of this application, when the electronic device 200 determines that the trusted verification succeeds and determines that the application widget 1 is not installed on the electronic device 200, the electronic device 200 may further determine whether the electronic device 200 and the electronic device 100 log in to a same account. If the electronic device 200 and the electronic device 100 log in to the same account, the electronic device 200 may automatically install and display the application widget 1 based on the application widget package 1 shared by the electronic device 100. To further improve security, before the electronic device 200 automatically installs and displays the application widget 1 based on the application widget package 1 shared by the electronic device 100, the electronic device 200 may further determine that the electronic device 200 and the electronic device 100 access a same local area network. Login account information and access local area network information of the electronic device 100 may be obtained by the electronic device 200 in a process of performing trusted verification on the electronic device 100.

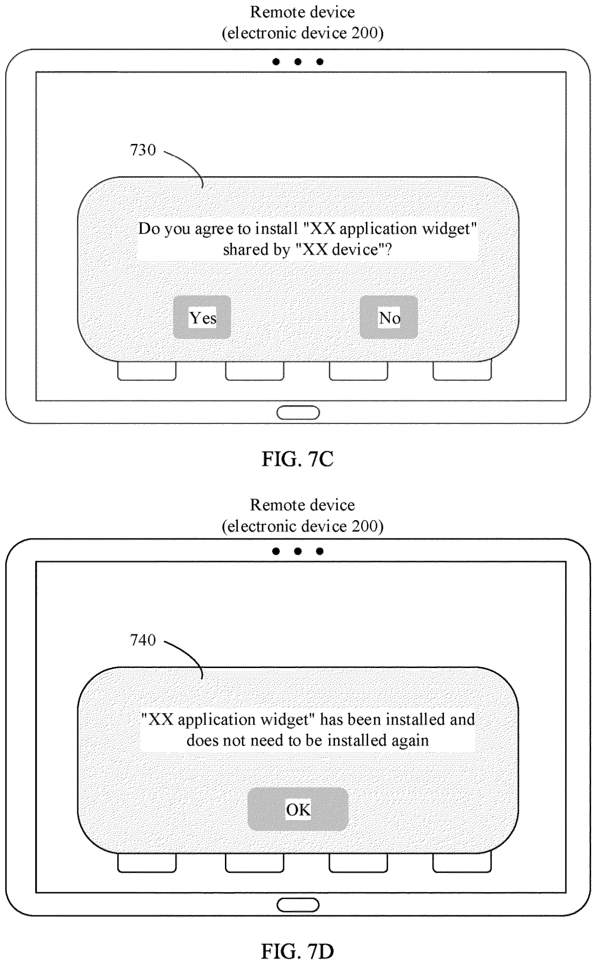

In some embodiments, refer to FIG. 7C. In order to give the user an autonomous selection right, or in a scenario in which the electronic device 200 and the electronic device 100 do not log in to the same account, before the electronic device 200 installs the application widget 1 based on the application widget package 1 shared by the electronic device 100, the electronic device 200 may display a window 730. The window 730 may display prompt information, for example, "Do you agree to install "XX application widget" shared by "XX device"?", to prompt the user whether to agree to install the application widget 1 shared by the electronic device 100. If the user agrees to install the application widget 1 (for example, the user taps a "Yes" option), the electronic device 200 may install the application widget 1 based on the application widget package 1 shared by the electronic device 100. If the user does not agree to install the application widget 1 (for example, the user taps a "No" option), the electronic device 200 does not install the application widget 1 based on the application widget package 1 shared by the electronic device 100.

In some embodiments, refer to FIG. 7D. After the electronic device 100 shares the application widget 1 with the electronic device 200, if the application widget 1 has been installed on the electronic device 200, the electronic device 200 may display a window 740. The window 740 may display prompt information, for example, ""XX application widget" has been installed and does not need to be installed again". In this way, the user may be prompted that the application widget 1 shared by the electronic device 100 has been installed on the electronic device 200 in advance and does not need to be installed again, to avoid an illusion that the user considers that the application widget 1 fails to be shared. Further, the electronic device 200 may further run and display the installed application widget 1 (for example, display the installed application widget 1 on the desktop). If the electronic device 100 further sends, to the electronic device 200, the data generated when the application widget 1 runs on the electronic device 100, the data is displayed on the application widget 1.

It should be noted that in embodiments of this application, that a local application widget of an electronic device or an application widget shared by another electronic device is displayed on a desktop of the electronic device is used as an example. This is not limited thereto. In addition, the local application widget of the electronic device or the application widget shared by the another electronic device may be further displayed on a leftmost interface or an interface of another application. This is not limited in embodiments of this application.

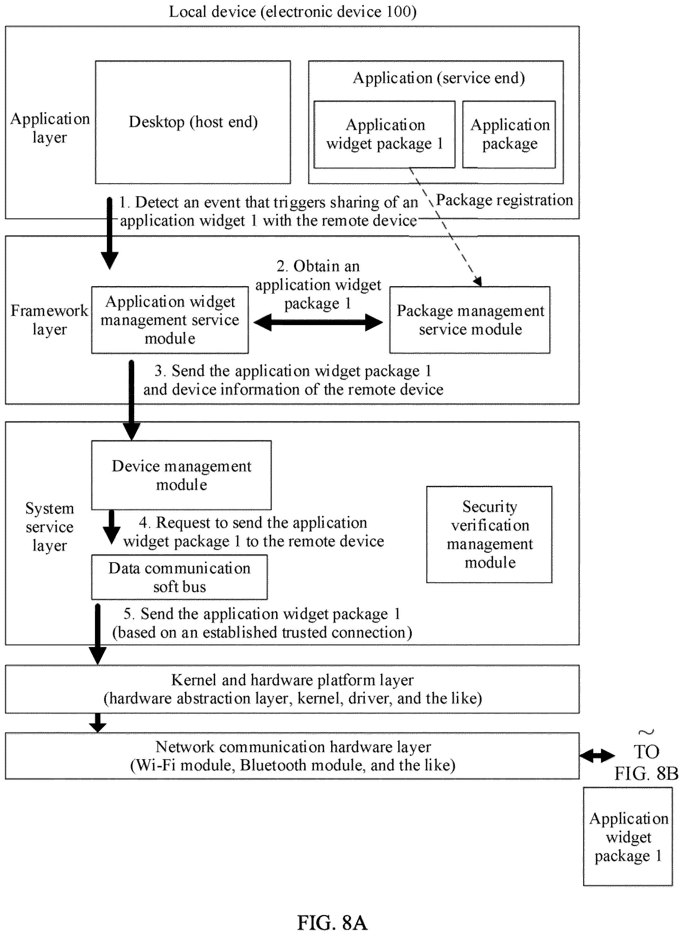

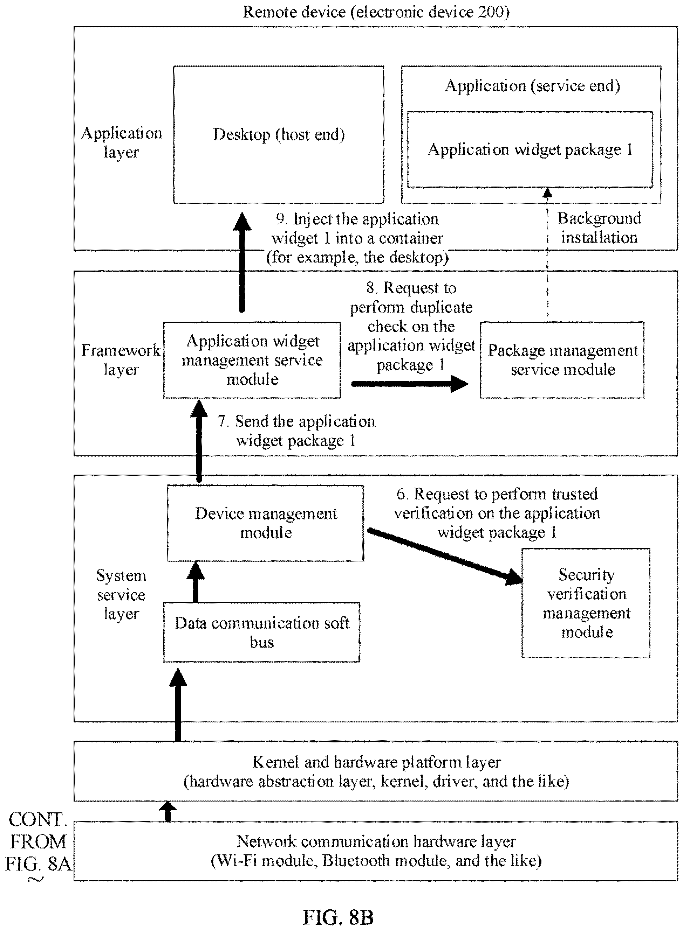

**With reference to** **FIG. 8A** **and** **FIG. 8B****, the following describes an example of a possible coordination manner between internal modules in the electronic device 100 and the electronic device 200 in the application widget sharing phase.**

Step 1: A desktop of the electronic device 100 detects an event that triggers sharing of an application widget 1 with a remote device (namely, a target device), and then the desktop may send device information of the target device and identifier information of the application widget 1 (which may also be referred to as a widget identifier of the application widget 1) to an application widget management service module of the electronic device 100.

The device information of the target device may include but is not limited to information such as a device identifier and a device type of the target device. In this embodiment of this application, an example in which the target device is the electronic device 200 is used for description.

Identifier information of the application widget package 1 may include but is not limited to a package name and a module name of an application widget. The package name, for example, com.xxx.xxx.sporthealth, may indicate that an application corresponding to the application widget is sport and health, and the module name, for example, com.xxx.xxx.weather, may indicate that the application widget is a weather application widget.

For example, the event that triggers sharing of the application widget 1 with the remote device may be an operation of tapping the option 621 (for example, the "Share" option) by the user shown in FIG. 6B.

Step 2: The application widget management service module of the electronic device 100 may invoke a package management service module of the electronic device 100, to request to obtain the application widget package 1 from the package management service module.

Specifically, after receiving the device information of the target device and the identifier information of the application widget 1 that are sent by the desktop of the electronic device 100, the application widget management service module of the electronic device 100 may send the identifier information of the application widget 1 to the package management service module of the electronic device 100. Because the application widget 1 has been installed on the electronic device 100, the application widget 1 has completed a package registration process in the package management service module of the electronic device 100. That is, the package management service module of the electronic device 100 already stores the application widget package 1. After receiving the identifier information of the application widget 1 sent by the application widget management service module of the electronic device 100, the package management service module of the electronic device 100 may query the application widget package 1 based on the identifier information of the application widget 1. After the query is completed, the package management service module may send the application widget package 1 to the application widget management service module of the electronic device 100.

Step 3: The application widget management service module of the electronic device 100 may send the application widget package 1 and the device information of the remote device (namely, the target device) to a device management module of the electronic device 100.

Specifically, after receiving the application widget package 1 sent by the package management service module of the electronic device 100, the application widget management service module of the electronic device 100 may send the application widget package 1 and the device information of the remote device (namely, the target device) to the device management module of the electronic device 100.

Step 4: The device management module of the electronic device 100 may invoke a data communication soft bus of the electronic device 100, to request to send the application widget package 1 to the remote device.

Specifically, after receiving the application widget package 1 and the device information of the remote device (namely, the target device) that are sent by the application widget management service module of the electronic device 100, the device management module of the electronic device 100 may send, to the data communication soft bus of the electronic device 100, a request for sending the application widget package 1 to the remote device, where the request may include the application widget package 1 and the device information of the remote device.

Step 5: The data communication soft bus of the electronic device 100 may send the application widget package 1 to the remote device based on an established trusted connection.

Specifically, after receiving the request that is sent by the device management module of the electronic device 100 and that is for sending the application widget package 1 to the remote device, the data communication soft bus of the electronic device 100 may determine, based on the device information of the remote device carried in the request, a remote device to which the application widget package 1 is sent. For example, the remote device is the electronic device 200. The data communication soft bus of the electronic device 100 may send the application widget package 1 to the electronic device 200 based on a trusted connection that has been established between the electronic device 100 and the electronic device 200 (that is, through a kernel and hardware platform layer, and a network communication hardware layer).

In some embodiments, when sending the application widget package 1 to the electronic device 200, the data communication soft bus of the electronic device 100 may further send device information of the electronic device 100 (for example, a device identifier of the electronic device 100) to the electronic device 200, so that the electronic device 200 learns which electronic device sends the application widget package 1.

In some embodiments, when sending the application widget package 1 to the electronic device 200, the data communication soft bus of the electronic device 100 may further send, to the electronic device 200, data generated when the electronic device 100 runs the application widget 1.

Step 6: A device management module of the electronic device 200 may invoke a security verification management module of the electronic device 200, to request to perform trusted verification on the application widget package 1.

Specifically, a data communication soft bus of the electronic device 200 may receive, through a kernel and hardware platform layer and a network communication hardware layer, the application widget package 1 sent by the electronic device 100. Then, the data communication soft bus of the electronic device 200 may send the application widget package 1 to the device management module of the electronic device 200. After receiving the application widget package 1, the device management module of the electronic device 200 may send a request for performing trusted verification on the application widget package 1 to a security verification management module of the electronic device 200. After receiving the request, the security verification management module of the electronic device 200 may perform trusted verification on the application widget package 1. Information verified in a trusted verification process may include but is not limited to information such as a certificate and a signature.

After determining that trusted verification on the application widget package 1 succeeds, the security verification management module of the electronic device 200 may send, to the device management module of the electronic device 200, trusted verification success indication information, to notify the device management module of the electronic device 200 that trusted verification on the application widget package 1 succeeds.

Step 7: The device management module of the electronic device 200 sends the application widget package 1 to an application widget management service module of the electronic device 200.

Specifically, after the security verification management module of the electronic device 200 determines that trusted verification on the application widget package 1 succeeds, the device management module of the electronic device 200 may send the application widget package 1 to the application widget management service module of the electronic device 200, to notify the application widget management service module of the electronic device 200 that the electronic device 200 receives the application widget package 1 sent by the electronic device 100.

Step 8: The application widget management service module of the electronic device 200 may invoke a package management service module of the electronic device 200, to request to perform duplicate check on the application widget package 1.

Specifically, after receiving the application widget package 1 sent by the device management module of the electronic device 200, the application widget management service module of the electronic device 200 may send a request for performing duplicate check on the application widget package 1 to the package management service module of the electronic device 200, where the request includes the application widget package 1. After receiving the request, the package management service module of the electronic device 200 may perform duplicate check on the application widget package 1. For a specific execution process of the duplicate check, refer to related content in step S409 shown in FIG. 4. Details are not described herein again.

After determining that the duplicate check succeeds (that is, the application widget package 1 sent by the electronic device 100 to the electronic device 200 is not duplicate with an installation package corresponding to an application widget that exists locally on the electronic device 200), the package management service module of the electronic device 200 may install the application widget 1 in the background based on the application widget package 1.

Step 9: The application widget management service module of the electronic device 200 may inject the application widget 1 that has been successfully installed into an application widget container (for example, a desktop).

Specifically, after the package management service module of the electronic device 200 successfully installs the application widget 1 in the background, the application widget management service module of the electronic device 200 may inject the application widget 1 into the application widget container (for example, the desktop), so that the application widget 1 may run in the container.

In embodiments of this application, the electronic device 100 may share an application widget with the electronic device 200 by using the method provided in embodiments of this application. Similarly, the electronic device 100 may also share an application with the electronic device 200 by using the method provided in embodiments of this application. It is easy to understand that a process of sharing an application is similar to a process of sharing an application widget. A difference lies in that when sharing the application, the electronic device 100 sends, to the electronic device 200, an installation package corresponding to the application that is to be shared, and the electronic device 200 may install the application based on the installation package corresponding to the application.

In some embodiments, because the application widget is provided by the application, when the electronic device 100 shares the application widget with the electronic device 200, when an application widget package (namely, an installation package corresponding to the application widget) is separated from an application package (namely, an installation package of the application corresponding to the application widget), the electronic device 100 may send, to the electronic device 200, the application widget package corresponding to the application widget that is to be shared; and when the application widget package is not separated from the application package (that is, the application widget package is included in the application package), the electronic device 100 may send the application package to the electronic device 200, and the electronic device 200 may install the application based on the application package. In this way, the application widget shared by the electronic device 100 with the electronic device 200 is also installed.

In the foregoing embodiments, network communication on which a process of sharing an application widget by the electronic device 100 with the electronic device 200 depends is near field network communication (for example, a near field network communication manner like Bluetooth or Wi-Fi). In some embodiments, the network communication on which the process of sharing the application widget by the electronic device 100 with the electronic device 200 depends may alternatively be far field network communication (for example, the Internet). The following uses an example to describe, based on FIG. 9A to FIG. 9C, a process in which the electronic device 100 shares an application widget with the electronic device 200 through far field network communication.

Refer to FIG. 9A. An application of an application market may be installed on the electronic device 100, and a plurality of application widgets may be released in the application market. A user interface 910 shown in FIG. 9A may be a download interface corresponding to an application widget (for example, an application widget 1, namely, "XX application widget") released in the application market, may support a user in downloading the application widget to the electronic device 100 (for example, the user may tap an installation option to download and install the application widget to the electronic device 100), may further support the user in sharing the application widget (for example, the user may tap an option 911 to share the application widget), and may further support the user in viewing information related to the application widget (for example, a name, a style, an introduction, and a comment of the application widget).

Still refer to FIG. 9A. If the user wants to share the application widget, the electronic device 100 may detect an operation (for example, a tap operation) of the user for the option 911, and in response to the operation, the electronic device 100 may display a window 920 shown in FIG. 9B as an example.

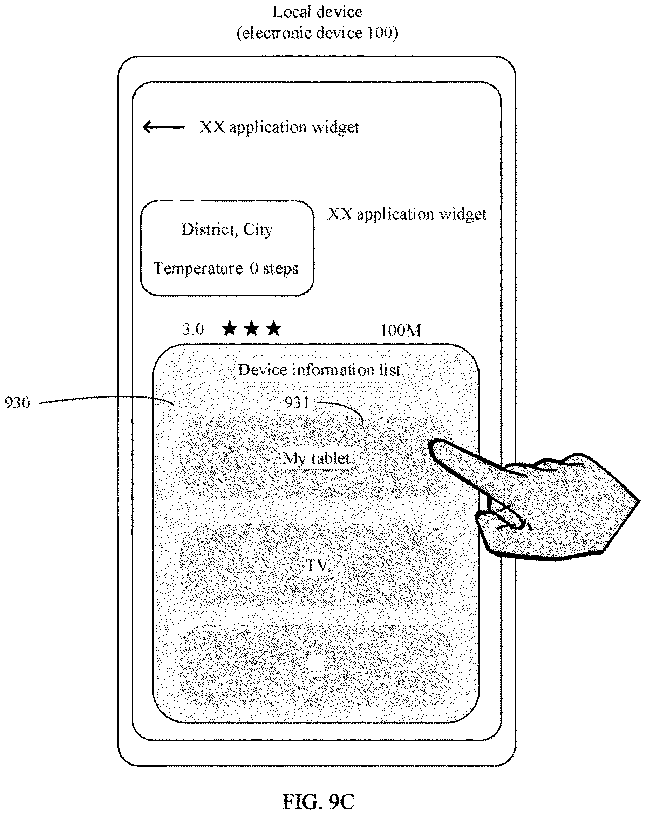

As shown in FIG. 9B, the window 920 may include one or more options (for example, a "Cloud disk" option, a "Friend" option, and a "Device" option 921), and the one or more options may be used to support the user in sharing the application widget with a cloud disk, a friend, another electronic device, and the like. If the user wants to share the application widget with another electronic device, the electronic device 100 may detect an operation (for example, a tap operation) of the user for the "Device" option 921, and in response to the operation, the electronic device 100 may display a window 930 shown in FIG. 9C as an example.

As shown in FIG. 9C, the window 930 may include a device information list, and the device information list may include options (for example, a "My tablet" option 931 and a "TV" option) corresponding to device information of one or more remote devices.

The one or more remote devices (for example, My tablet or TV) displayed in the device information list may be an electronic device that logs in to a same account (for example, a same Huawei account) as the electronic device 100, or may be an electronic device that establishes a trusted connection to the electronic device 100.

Still refer to FIG. 9C. It is assumed that the electronic device 200 is "My tablet". If the user wants to share the application widget with the electronic device 200, the electronic device 100 may detect an operation (for example, a tap operation) of the user for the "My tablet" option 931, and in response to the operation, the electronic device 100 may send, to the electronic device 200, a uniform resource locator (Uniform Resource Locator, URL) corresponding to an application widget package of the application widget, namely, a download link (or referred to as a download website) corresponding to the application widget package of the application widget, and may further send a widget identifier of the application widget to the electronic device 200.

After receiving the URL and the widget identifier that correspond to the application widget (for example, the application widget 1) and that are sent by the electronic device 100, the electronic device 200 may download and install the application widget in an application, namely, an application market, of the electronic device 200 based on the URL and the widget identifier, and after the installation of the application widget is completed and the application widget is injected into a container (for example, a container provided by a desktop of the electronic device 200), the application widget may be run and displayed on the electronic device 200 (for example, may be displayed on the desktop of the electronic device 200 as shown in FIG. 7B).

In some embodiments, because an application market server stores installation packages of all released applications, the foregoing URL may be a general download website, namely, a website corresponding to locations of the installation packages of all released applications that are stored on the application market server. The electronic device 200 may obtain, from the application market server based on a device type of the electronic device 200 and the URL and the widget identifier that are sent by the electronic device 100, a download link of an installation package of an application widget that is applicable to the device type of the electronic device 200 and that corresponds to the widget identifier, and perform downloading.

In some embodiments, because the electronic device 100 may learn the device type of the electronic device 200, when the electronic device 100 shares the application widget 1 with the electronic device 200, the electronic device 100 may obtain, from the application market server based on the device type of the electronic device 200, the URL, and the widget identifier of the application widget 1, a download link of an installation package of the application widget 1 that is applicable to the device type of the electronic device 200, and then may send the download link to the electronic device 200. In this way, the electronic device 200 may directly download, from the application market server based on the download link, the application widget package 1 that is applicable to the device type of the electronic device 200.

In some embodiments, the URL and the widget identifier may alternatively be combined into a download link (which may also be referred to as a third download link), that is, the download link corresponds to a download link of installation packages of all versions of an application widget (namely, installation packages of the application widget that is applicable to all device types). In this way, the electronic device 100 only needs to send the download link to the electronic device 200 to implement application widget sharing.

It is easy to understand that, if the application widget has been installed on the electronic device 200 before the electronic device 100 shares the application widget with the electronic device 200, the application widget may not be installed again after the electronic device 100 shares the application widget with the electronic device 200.

In some embodiments, to give the user an autonomous selection right, before the electronic device 200 installs the application widget 1 based on the download link shared by the electronic device 100, the prompt information shown in FIG. 7C may also be displayed.

In some embodiments, before installing the application widget 1 based on the download link shared by the electronic device 100, the electronic device 200 may first determine that the electronic device 100 is a trusted device, or first determine that the electronic device 100 and the electronic device 200 log in to a same account.

In some embodiments, the electronic device 100 may alternatively share an application widget with an electronic device of a friend by using some social applications, that is, the electronic device 100 may send a URL of an application widget to the electronic device of the friend by using some social applications, and the friend may download and install the application widget on the electronic device of the friend based on the URL. After the installation of the application widget is completed and the application widget is injected into a container (for example, a container provided by a desktop of the electronic device of the friend), the application widget may be run and displayed on the electronic device of the friend (for example, may be displayed on the desktop of the electronic device of the friend as shown in FIG. 7B).

In embodiments of this application, a first electronic device may be the electronic device 100 (which may also be referred to as a local device). A second electronic device may be the electronic device 200 (which may also be referred to as a remote device). A first application widget may be a local application widget of the electronic device 100, or may be an application widget released in the application market of the electronic device 100. A first user interface may be a user interface of a desktop or the application market. First information may be information about the first application widget (for example, an installation package or a download link). A first window may be the window 630 shown in FIG. 6C or the window 930 shown in FIG. 9C. First data may be data generated when the electronic device 100 runs the first application widget. First content may be generated based on the first data (for example, a temperature of 22°C and a step count of 6888 steps). A first download link may be a link (for example, a general download website indicated by the foregoing URL) for downloading installation packages of all released application widgets in the application market. A second download link may be a link for downloading an installation package of the first application widget that adapts to the second electronic device (for example, the foregoing download link of the installation package of the application widget 1 that is applicable to the device type of the electronic device 200).

The following describes a schematic diagram of a structure of an electronic device 100 according to an embodiment of this application.

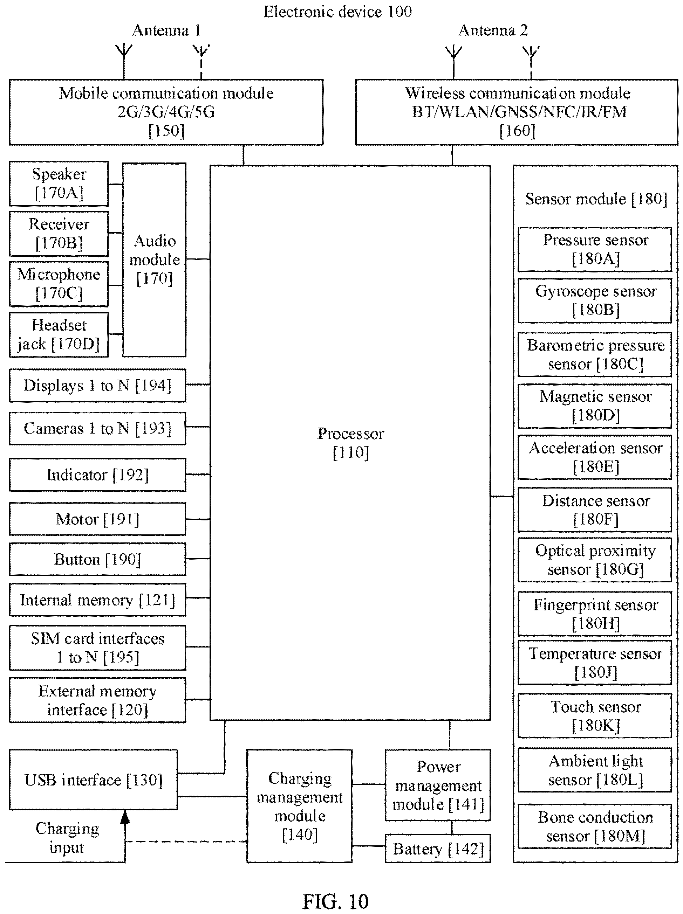

**FIG. 10** **shows an example of a structure of an electronic device 100 according to an embodiment of this application.**

As shown in FIG. 10, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call by using a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using the Bluetooth headset.

The MIPI interface may be configured to connect the processor 110 to a peripheral device like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by using software. The GPIO interface may be configured for control signals or data signals. In some embodiments, the GPIO interface may be configured to connect the processor 110 to the camera 193, the display 194, the wireless communication module 160, the audio module 170, the sensor module 180, and the like. The GPIO interface may be alternatively configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be configured to connect to the charger to charge the electronic device 100, or may be configured to exchange data between the electronic device 100 and a peripheral device, or may be configured to connect to a headset, to play audio through the headset. The interface may alternatively be configured to connect to another terminal device, for example, an AR device.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device 100 by using the power management module 141.

The power management module 141 is configured to connect the battery 142 and the charging management module 140 to the processor 110. The power management module 141 receives an input of the battery 142 and/or the charging management module 140, and supplies power to the processor 110, the internal memory 121, the external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may be alternatively disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may further be multiplexed to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transmits a processed signal to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in the same device with the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by using the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, a ray of light is transmitted to a photosensitive element of the camera through a lens, and an optical signal is converted into an electrical signal. The photosensitive element of the camera transmits the electrical signal to the ISP for processing, to convert the electrical signal into a visible image. The ISP may further perform algorithm optimization on noise, brightness and the like of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) photoelectric transistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal of a standard format such as RGB or YUV. In some embodiments, the electronic device 100 may include one or N cameras 193, where N is a positive integer greater than 1.

The digital signal processor is configured to process a digital signal. In addition to the digital image signal, the digital signal processor may further process another digital signal. For example, when the electronic device 100 selects a frequency, the digital signal processor is configured to perform Fourier transform or the like on frequency energy.

The video codec is configured to compress or decompress a digital video. The electronic device 100 may support one or more types of video codecs. In this way, the electronic device 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device 100, for example, image recognition, facial recognition, speech recognition, and text understanding, can be implemented through the NPU.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The processor 110 runs the instructions stored in the internal memory 121 to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and a phone book) created during use of the electronic device 100, and the like. In addition, the internal memory 121 may include a high-speed random access memory, and may further include a nonvolatile memory, for example, at least one magnetic disk storage device, a flash storage device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode audio signals. In some embodiments, the audio module 170 may be disposed in the processor 110, or some functional modules of the audio module 170 may be disposed in the processor 110.

The speaker 170A, also referred to as a "loudspeaker", is configured to convert an audio electrical signal into a sound signal. The electronic device 100 may be configured to listen to music or answer a hands-free call by using the speaker 170A.

The receiver 170B, also referred to as an "earpiece", is configured to convert an audio electrical signal into a sound signal. When a call is answered or speech information is received by using the electronic device 100, the receiver 170B may be put close to a human ear to listen to a speech.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to implement a noise reduction function, in addition to collecting a sound signal. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed on a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to a first pressure threshold is performed on an SMS message application icon, an instruction for creating an SMS message is executed.

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in navigation and motion sensing game scenarios.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect values of acceleration of the electronic device 100 in various directions (usually on three axes). When the electronic device 100 is still, a magnitude and a direction of gravity may be detected. The acceleration sensor 180E may be further configured to identify a posture of the electronic device 100, and is applied to applications such as a pedometer and switching between a landscape mode and a portrait mode.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be configured to automatically unlock and lock a screen in a flip cover mode and a pocket mode.

The ambient light sensor 180L is configured to sense ambient light brightness. The electronic device 100 may adaptively adjust brightness of the display 194 based on the sensed ambient light brightness. The ambient light sensor 180L may be further configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application access locking, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. Visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse to receive a blood pressure beating signal. In some embodiments, the bone conduction sensor 180M may alternatively be disposed in a headset to form a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt or a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, time reminding, information receiving, an alarm clock, and a game) may also correspond to different vibration feedback effects. A touch vibration feedback effect may further be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into the same SIM card interface 195 at the same time. The plurality of cards may be of a same type or different types. The SIM card interface 195 may be compatible with different types of SIM cards. The SIM card interface 195 may also be compatible with the external memory card. The electronic device 100 interacts with a network through the SIM card, to implement functions such as conversation and data communication. In some embodiments, the electronic device 100 uses an eSIM, namely, an embedded SIM card. The eSIM card may be embedded in the electronic device 100, and cannot be separated from the electronic device 100.

It should be understood that the electronic device 100 shown in FIG. 10 is merely an example, and the electronic device 100 may have more or fewer components than those shown in FIG. 10, or may have two or more components that are combined, or may have different component configurations. Various components shown in FIG. 10 may be implemented in hardware, software, or in a combination of hardware and software that includes one or more signal processing and/or application-specific integrated circuits.

A structure of the electronic device 200 may be the same as or similar to the structure of the electronic device 100. For related content of the structure of the electronic device 200, refer to related text descriptions of the structure of the electronic device 100 shown in FIG. 10. Details are not described herein again.

All or some of the foregoing embodiments may be implemented by software, hardware, firmware, or any combination thereof. When the software is used to implement the foregoing embodiments, all or some of the foregoing embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may understand that all or some of the processes of the methods in the embodiments may be implemented by a computer program instructing related hardware. The program may be stored in a computer-readable storage medium. When the program is run, the procedures of the methods in the embodiments may be performed. The foregoing storage medium includes any medium that can store program code, such as a ROM, a random access memory RAM, a magnetic disk, or an optical disc.

The foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the technical solutions of embodiments of this application.

## Claims

1. An application widget sharing method, applied to a first electronic device, wherein the method comprises:
displaying, by the first electronic device, a first user interface, wherein the first user interface comprises a first application widget; and
detecting, by the first electronic device, an operation of sharing the first application widget by a user with a second electronic device, and sending, by the first electronic device, first information to the second electronic device in response to the operation, wherein the first information is information about the first application widget, and the first information is used by the second electronic device to install and display the first application widget.

2. The method according to claim 1, wherein before the detecting, by the first electronic device, an operation of sharing the first application widget by a user with a second electronic device, the method further comprises:
detecting, by the first electronic device, an operation of sharing the first application widget by the user, and displaying, by the first electronic device, a first window in response to the operation, wherein the first window comprises one or more identifier options, and the one or more identifier options comprise an identifier option of the second electronic device; and
the detecting, by the first electronic device, an operation of sharing the first application widget by a user with a second electronic device specifically comprises:
detecting, by the first electronic device, an operation of the user for the identifier option of the second electronic device.

3. The method according to claim 1 or 2, wherein the first information comprises an installation package of the first application widget.

4. The method according to claim 3, wherein the first information further comprises first data, the first data is data generated when the first electronic device runs the first application widget, the first data is used by the second electronic device to generate first content, and the first content is displayed on the first application widget.

5. The method according to any one of claims 1 to 4, wherein the first user interface is a desktop.

6. The method according to claim 1 or 2, wherein the first user interface is a user interface of an application market.

7. The method according to claim 6, wherein the first information comprises a first download link and a widget identifier of the first application widget, and the first download link is a link for downloading installation packages of all released application widgets in the application market; or the first information comprises a second download link, and the second download link is a link for downloading an installation package of the first application widget adapted to the second electronic device.

8. The method according to any one of claims 1 to 5, wherein before the detecting, by the first electronic device, an operation of sharing the first application widget by a user with a second electronic device, the method further comprises:
establishing, by the first electronic device, a communication connection to the second electronic device, and determining that the second electronic device is a trusted device.

9. An application widget sharing method, applied to a second electronic device, wherein the method comprises:
receiving, by the second electronic device, first information sent by a first electronic device, wherein the first information is information about a first application widget; and
automatically installing and displaying, by the second electronic device, the first application widget based on the first information when determining that the first electronic device meets a first condition, wherein
the first condition comprises: the first electronic device and the second electronic device log in to a same account.

10. The method according to claim 9, wherein the displaying, by the second electronic device, the first application widget specifically comprises:
displaying, by the second electronic device, the first application widget on a desktop.

11. The method according to claim 9 or 10, wherein the first information comprises an installation package of the first application widget, and the automatically installing and displaying, by the second electronic device, the first application widget based on the first information specifically comprises:
automatically installing and displaying, by the second electronic device, the first application widget based on the installation package of the first application widget.

12. The method according to claim 11, wherein the first information further comprises first data, the first data is data generated when the first electronic device runs the first application widget, and the automatically installing and displaying, by the second electronic device, the first application widget based on the first information specifically comprises:
automatically installing and displaying, by the second electronic device, the first application widget based on the installation package of the first application widget and the first data, wherein first content is displayed in the first application widget, and the first content is generated by the second electronic device based on the first data.

13. The method according to any one of claims 9 to 12, wherein before the automatically installing and displaying, by the second electronic device, the first application widget based on the first information, the method further comprises:
determining, by the second electronic device, that the first application widget is not installed on the second electronic device.

14. The method according to any one of claims 9 to 13, wherein before the receiving, by the second electronic device, first information sent by a first electronic device, the method further comprises:
establishing, by the second electronic device, a communication connection to the first electronic device, and determining that the first electronic device is a trusted device.

15. A communication system, wherein the communication system comprises a first electronic device and a second electronic device;
the first electronic device is configured to display a first application widget;
the first electronic device is further configured to: detect an operation of sharing the first application widget by a user with the second electronic device, and send first information to the second electronic device in response to the operation;
the second electronic device is configured to receive the first information; and
the second electronic device is further configured to install and display the first application widget based on the first information.

16. The communication system according to claim 15, wherein that the second electronic device is further configured to install and display the first application widget based on the first information specifically comprises:
the second electronic device automatically installs and displays the first application widget based on the first information when determining that the first electronic device meets a first condition, wherein
the first condition comprises: the first electronic device and the second electronic device log in to a same account.

17. The communication system according to claim 15, wherein the first information comprises a first download link and a widget identifier of the first application widget, the first download link is a link for downloading installation packages of all released application widgets in an application market, and that the second electronic device is further configured to install and display the first application widget based on the first information specifically comprises:
the second electronic device downloads, based on the first download link, the widget identifier of the first application widget, and a device type of the second electronic device, an installation package of the first application widget adapted to the second electronic device; and
the second electronic device installs and displays the first application widget based on the installation package of the first application widget adapted to the second electronic device.

18. The communication system according to claim 15, wherein the first information comprises a second download link, the second download link is a link for downloading an installation package of the first application widget adapted to the second electronic device, and that the second electronic device is further configured to install and display the first application widget based on the first information specifically comprises:
the second electronic device downloads, based on the second download link, the installation package of the first application widget adapted to the second electronic device; and
the second electronic device automatically installs and displays the first application widget based on the installation package of the first application widget adapted to the second electronic device.

19. An electronic device, wherein the electronic device comprises one or more processors and one or more memories, wherein the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 8 or claims 9 to 14.

20. A computer storage medium, wherein the computer storage medium stores a computer program, the computer program comprises program instructions, and when the program instructions are run on an electronic device, the electronic device is enabled to perform the method according to any one of claims 1 to 8 or claims 9 to 14.
